# FASCICULE DE BREVET EUROPEEN

(11) **EP 4 193 051 B1**
(45) Date de publication et mention de la délivrance du brevet: **07.08.2024**
(21) Numéro de dépôt: 22757312.8
(22) Date de dépôt: 21.07.2022
(51) Int. Cl.: F02D 31/00, B64C 29/00, B64C 39/02, B64D 27/02, B64D 33/04, B64C 17/00, B64D 27/20, B64D 31/06, B64D 31/10, F02K 1/11, F02K 1/15, F02K 1/40, B64C 17/02, B64D 27/24

(54) **PROCÉDÉ DE PILOTAGE D'UN GROUPE DE POUSSÉE POUR DISPOSITIF DE PROPULSION**
VERFAHREN ZUR STEUERUNG EINER SCHUBANORDNUNG FÜR EINE ANTRIEBSVORRICHTUNG
METHOD FOR CONTROLLING A THRUST ASSEMBLY FOR A PROPULSION DEVICE

(30) Priorité: 20.10.2021 FR 2111126
(43) Date de publication de la demande: 14.06.2023
(73) Titulaire: Zipair, 13220 Chateauneuf-les-Martigues (FR)
(72) Inventeur: ZAPATA, Frankie, 13740 LE ROVE (FR); AULAGNIER, Laurent, 13008 MARSEILLE (FR); UHL, Adrien, 13090 AIX-EN-PROVENCE (FR)
(74) Mandataire: Med'inVent Consulting
(86) Numéro de dépôt international: PCT/FR2022/051458
(87) Numéro de publication internationale: WO 2023/067252

(56) Documents cités:
- WO-A1-2019/030460
- CA-A1- 2 754 091
- CN-A- 112 173 079
- US-A1- 2008 243 313
- US-A1- 2019 047 714
- US-B2- 7 032 861
- US-B2- 8 056 866

## Description

L'invention concerne le domaine des dispositifs de propulsion, préférentiellement mais non limitativement aériens à propulsion verticale, adaptés ou agencés pour assurer des élévations et déplacements d'une charge que celle-ci soit constituée d'un ou plusieurs passagers humains ou animaux et/ou d'une ou plusieurs marchandises solides ou fluides dont le dispositif de propulsion assurerait le transport. L'invention concerne notamment des perfectionnements d'un groupe de poussée d'un tel dispositif de propulsion conçus pour conférer une très grande réactivité dudit groupe de poussée et par voie de conséquence une très grande stabilisation de l'assiette dudit dispositif et une grande précision dans ses trajectoires. L'invention se veut très simple à mettre en oeuvre et accessible au plus grand nombre de dispositifs de propulsion quelle qu'en soit l'application principale ou secondaire, dans le domaine aérien, terrestre ou aquatique. Dans la suite du document, l'invention sera décrite, préférentiellement mais non limitativement, en application avec un aéronef ou aérodyne agencé pour offrir une capacité de décollage et d'atterrissage sensiblement verticaux. A titre d'exemples non limitatifs, un tel dispositif de propulsion peut consister en un drone, un quadricoptère ou octocoptère ou un dispositif volant dont un exemple de réalisation est décrit dans le document WO 2017/174942 A1. L'invention ne saurait toutefois être limitée à ces seuls exemples d'application et pourrait être en lieu et place être employée en lien avec tout type de dispositif de propulsion d'une charge.

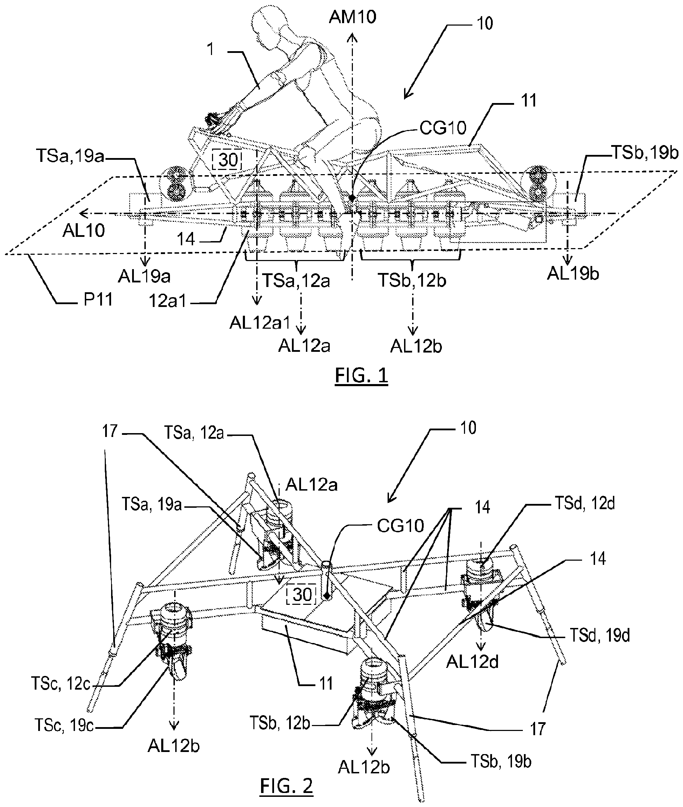

Un tel dispositif de propulsion comporte généralement un groupe de poussée comportant un moteur thermique, également appelé par la suite « moteur ou à combustion interne ». Ce dernier peut consister en un moteur à arbre rotatif, de type moteur à deux ou quatre temps, couplé à un rotor mécanique pour délivrer un vecteur de poussée, c'est-à-dire une force de poussée selon une direction donnée. En variante, un tel moteur à combustion interne peut consister en un turboréacteur. La figure 1 illustre un premier exemple d'un dispositif de propulsion tiré du document WO 2017/174942 A1. Un dispositif de propulsion 10 que l'on pourrait qualifier de « motocyclette volante » comporte deux systèmes de TSa et TSb, par exemple comprenant respectivement deux groupes de poussée 12a et 12b, délivrant chacun un vecteur de poussée résultant AL12a et AL12b. Selon l'exemple de la figure 1, chaque groupe de poussée est doté d'une pluralité de propulseurs à combustion interne sous la forme de turboréacteurs. Chaque turboréacteur, par exemple le turboréacteur 12a1, peut être décrit comme l'association d'un moteur à combustion interne à arbre rotatif couplé à un rotor mécanique. Un tel turboréacteur transforme l'énergie potentielle contenue dans un carburant, par exemple du kérosène ou équivalent, associé à un comburant, en l'occurrence l'air ambiant aspiré par une entrée de fluide en énergie cinétique. Cette énergie cinétique génère une force de réaction en milieu élastique, dans le sens opposé à l'éjection d'un rejet gazeux. Il en résulte une accélération d'une certaine quantité d'air entre l'entrée de fluide du propulseur et la tuyère ou sortie d'éjection 12a-o de ce dernier, produisant une poussée par détente dans ladite tuyère d'éjection. Le turboréacteur 12a1 génère ainsi un vecteur de poussée AL12a1 qui lui est propre. Le vecteur de poussée résultant AL12a du groupe de poussée 12a consiste en la conjonction des vecteurs de poussée générés respectivement par les turboréacteurs qui le composent. Les groupes de poussée 12a et 12b sont soutenus par des moyens supports 14 mutuellement agencés avec la plateforme 11, notamment pour que les vecteurs de poussée AL12a, AL12b desdits groupes de poussée 12a et 12b soient orientés sensiblement normaux à une plateforme 11 que nous pouvons, par mesure de simplification, réduire à l'équivalent d'un plan virtuel P11 représenté en lignes pointillées sur la figure 1, ledit plan P11 étant un plan sensiblement horizontal lorsque ledit dispositif de propulsion aérien 10 est posé sur un support horizontal. Ainsi, sous l'effet desdits vecteurs de poussée AL12a et AL12b, une charge 1 véhiculée par ladite plateforme 11 peut s'élever verticalement. En l'espèce sur la figure 1, ladite charge consiste principalement en un passager humain 1.

Selon l'exemple de la figure 1, l'agencement des moyens supports 14 est tel que lesdits turboréacteurs des deux groupes de poussée sont avantageusement disposés sensiblement le long d'un axe longitudinal AL10 de la plateforme 11, c'est-à-dire le long d'un axe orienté de la poupe vers la proue du dispositif de propulsion 10, compris dans le plan P11. Les vecteurs de poussée AL12a et AL12b desdits turboréacteurs des groupes de poussée 12a et 12b s'inscrivent ainsi dans un même plan (non représenté sur la figure 1 par mesure de simplification) normal à ladite plateforme 11, c'est-à-dire normal au plan virtuel P11 symbolisant cette dernière. Nous pouvons constater que, selon cet exemple, le centre de gravité CG10 du corps du dispositif 10 est situé au-dessus des sorties d'éjections de fluide desdits turboréacteurs des systèmes de poussée TSa et TSb. Un tel agencement permet audit passager 1, par la simple inclinaison de son corps, de provoquer un changement de direction (ou trajectoire « en lacet », ou encore nommée « yaw » selon une terminologie anglo-saxonne). Selon cet exemple, les systèmes de poussée TSa et TSb du dispositif de propulsion 10 comportent en outre respectivement des moyens correcteurs d'assiette 19a et 19b sous la forme de propulseurs électriques secondaires, en l'espèce sur la figure 1 des turbines électriques, agencés aux extrémités (proue et poupe) du corps dudit dispositif de propulsion 10. Lesdits moyens correcteurs d'assiette 19a et 19b délivrent respectivement des vecteurs de poussée additionnels AL19a et AL19b parallèles aux vecteurs de poussée AL12a et AL12b délivrés conjointement par les turboréacteurs des groupes de poussée 12a et 12b. Les turbines électriques 19a et 19b sont exploitées pour modifier l'assiette de la plateforme 11. En effet, selon le document WO 2017/174942 A1, la puissance de ces dernières est régulée par un contrôleur de navigation ou de vol 30, sous la forme de moyens de traitement électroniques, exploitant une consigne de pilotage du passager 1, pour provoquer un changement d'assiette (ou « pitch » selon une terminologie anglo-saxonne) de sorte à « cabrer » son véhicule, sous l'action positive de la force de poussée du propulseur secondaire de proue 19a ou, inversement, pour faire « plonger » la proue de celui-ci, sous l'action positive de la force de poussée du propulseur secondaire de poupe 19b. Un tel changement d'assiette, combiné à la poussée délivrée par les groupes de poussée 12a et 12b, provoque un déplacement horizontal du dispositif de propulsion 10 vers l'avant ou vers l'arrière. Lesdits propulseurs électriques secondaires 19a et 19b peuvent être également automatiquement actionnés par ledit contrôleur de navigation 30 pour stabiliser ou maintenir une assiette ou assiette sensiblement constante du dispositif de propulsion 10 en réponse à des données de mesure émanant d'une centrale inertielle, par exemple intégrée audit contrôleur de navigation 30. Lorsque tel ou tel propulseur secondaire correcteur d'assiette 19a ou 19b est actionné, son vecteur de poussée AL19a AL19b s'additionne aux vecteurs de poussée AL12a et AL12b générés par les groupes de poussée 12a et 12b. En lieu et place de turboréacteurs, un tel dispositif de propulsion pourrait être mu par des moteurs thermiques, par exemple de types moteurs deux temps ou quatre temps, entraînant un rotor mécanique comme le décrit le document US2,417,896.

La figure 2 décrit un deuxième exemple de dispositif de propulsion aérien permettant l'élévation d'une charge véhiculée par ce dernier. Un enseignement technique est tiré du document EP 3495262 A1. Il s'agit d'un quadricoptère comportant des moyens supports 14 de propulseurs, lesdits moyens supports 14 se présentant sous la forme de quatre bras décrivant un 'X' au-dessus d'une plateforme 11 sensiblement plane. Chaque bras supporte un système de poussée TSa, TSb, TSc, TSd comportant chacun un groupe de poussée 12a, 12b, 12c, 12d composé d'un propulseur thermique, à l'instar du précédent exemple, sous la forme d'un turboréacteur. Pour élever une charge, non représentée sur la figure 2, véhiculée par la plateforme 11, les quatre groupes de poussée 12a, 12b, 12c, 12d, comportant chacun un turboréacteur, délivrent respectivement des vecteurs de poussée AL12a, AL12b, AL12c, AL12d, sensiblement normaux à la plateforme 11. Pour atterrir sans endommager les tuyères ou sorties d'éjection de fluide des turboréacteurs des groupe de poussée 12a à 12d, les bras des moyens supports 14 des systèmes de poussée TSa, TSb, TSc et TSd coopèrent, au niveau de leur parties distales respectives, avec des moyens saillants ou pieds avantageusement télescopiques 17. Un contrôleur de navigation ou de vol 30, sous la forme de moyens de traitement électroniques, délivre des commandes de poussée aux systèmes de poussée TSa, TSb, TSc, TSd. Les sorties de fluides des propulseurs des systèmes de poussée sont positionnées au-dessus ou en-dessous, sensiblement au niveau du centre de gravité CG10 du dispositif 10 selon la configuration et l'agencement des moyens supports 14. Pour modifier et stabiliser l'assiette de la plateforme 11, chaque système de poussée TSa à TSd comporte des moyens de correction 19a, 19b, 19c, 19d des vecteurs de poussée AL12a, AL12b, AL12c, AL12d délivrés respectivement par les groupes de poussée 12a à 12d. Les moyens 19a à 19d sont pilotés en outre par le contrôleur électronique de navigation 30.

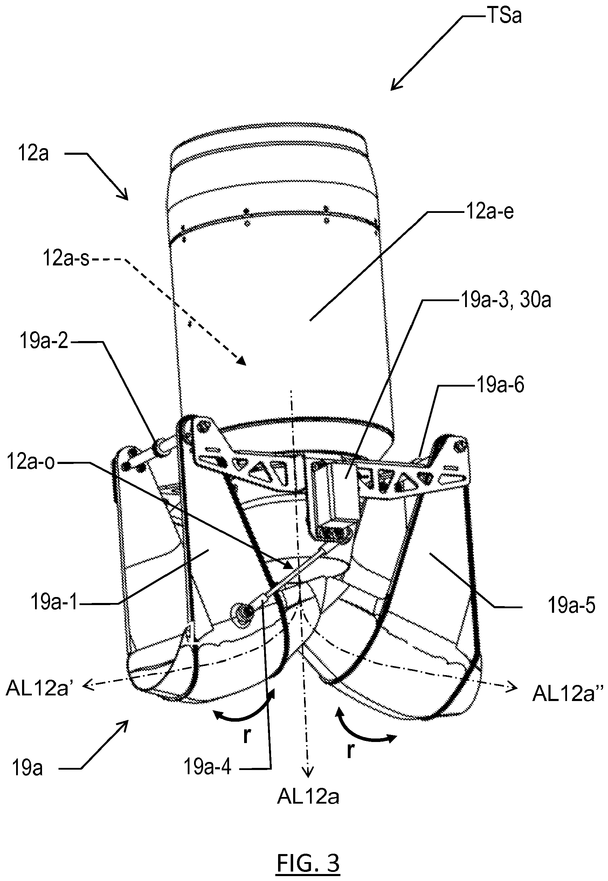

La figure 3 illustre l'agencement de tels moyens correcteurs de vecteur de poussée 19a associés au groupe de poussée 12a du système de poussée TSa selon la figure 2. Lesdits moyens 19a correcteurs de vecteur de poussée comportent une paire de guides déflecteurs 19a-1 et 19a-5 montés mobiles, plus précisément via des liaisons pivots respectives 19a-2 et 19a-6. Lesdits guides déflecteurs 19a-1 et 19a-5 sont agencés pour dévier tout ou partie du vecteur de poussée AL12a au niveau d'une région proche de la sortie d'éjection de fluide 12a-o du turboréacteur 12a-e du groupe de poussée 12a. L'ensemble déflecteur composés des guides déflecteurs 19a-1 et 19a-5 permet ainsi de décrire un « pincement » dudit vecteur de poussée AL12a. Les guides déflecteurs 19a-1 et 19a-5 sont avantageusement actionnés respectivement par une paire d'actionneurs à came ou servomoteurs, dont seul l'actionneur 19a-3 est visible sur la figure 3. Ainsi, l'actionneur 19a-3 coopère via une bielle 19a-4 avec le guide déflecteur 19a-1. L'actionnement de la came de l'actionneur 19a-3 provoque un mouvement rotatif r du guide déflecteur 19a-1 autour de l'axe 19a-2 situé au-dessus de la région d'éjection de fluide du turboréacteur 12a, ce qui réduit le couple nécessaire à l'actionneur 19a-3 pour surmonter et résister à l'aspiration ou au rejet généré par le vecteur de poussée AL12a délivré par le turboréacteur 12a-e du groupe de poussée 12a lors de la fermeture et de l'ouverture du guide déflecteur 19a-1. Lorsque les actionneurs à came, tels que l'actionneur 19a-3, associés respectivement aux guides déflecteurs 19a-1 et 19a-5 provoquent un pincement du vecteur de poussée AL12a par ces derniers, ledit vecteur de poussée AL12a se subdivise en aval desdits guides déflecteurs en deux ou trois composantes AL12a, AL12a', AL12a" selon que tel ou tel guide déflecteur 19a-1 ou 19a-5 pénètre ou non le flux éjecté à la sortie de fluide 12a-o du turboréacteur 12a-e. Dans une configuration « ouverte » selon laquelle les guides déflecteurs 19a-1 et 19a-5 sont positionnés sensiblement hors de la trajectoire du vecteur de poussée AL12a, la force dudit vecteur de poussée AL12a est maximale. En revanche, lorsque l'un des deux (ou les deux) guides déflecteurs 19a-1, 19a-5 « pince » ledit vecteur de poussée, la force de poussée résultante dudit vecteur de poussée AL12a, en aval desdits guides déflecteurs 19a-1 et 19a-5, s'en trouve réduite, jusqu'à être annulée lors d'un « pincement total » desdits guides déflecteurs 19a-1 et 19a-5 du flux en sortie de tuyère 12a-o du turboréacteur. Selon l'agencement desdits guides déflecteurs 19a-1 et 19a-5, ces derniers s'apparentant sur la figure 3 à deux coupelles ou surfaces semicirculaires sensiblement curvilignes se faisant face, il peut résulter dans le cas d'une configuration « fermée » des deux guides 19a-1 et 19a-5, une contrepoussée, c'est-à-dire un vecteur de poussée d'une direction opposée à celle du vecteur de poussée AL12a à la sortie d'éjections de fluide 12a-o. Une telle contre-poussée, par exemple de l'ordre de dix à trente pourcents, peut être rendue possible grâce à morphologie desdits guides. En effet, ces derniers peuvent être agencés pour guider respectivement des écoulements fluidiques provoquant en sortie (parties distales) desdits guides, des vecteurs de poussée secondaire AL12a' et AL12a" orientés selon des directions sensiblement opposées à la direction du vecteur de poussée originel AL12a en sortie d'éjection de fluide 12a-o du turboréacteur 12a-e.

Les différents modes de réalisation d'un système de poussée d'un dispositif de propulsion aérien décrit à titre d'exemples non limitatifs en lien avec les figures 1 à 3, partagent un même principe général. Il consiste à prévoir un contrôleur de navigation électronique 30 pilotant des propulseurs principaux (groupes de poussée tel que le groupe 12a) associés à des propulseurs secondaires correcteurs d'assiette (tels que les moyens 19a). Un tel contrôleur électronique de navigation 30 peut ainsi majoritairement solliciter la puissance première des propulseurs principaux puis solliciter la puissance annexe des propulseurs secondaires correcteurs d'assiette du dispositif de propulsion aérien à partir d'une mesure délivrée par une centrale inertielle, indépendamment des commandes de puissance élaborées par ledit contrôleur électronique de navigation 30 pour chacun desdits propulseurs principaux. Enfin, lorsque la correction d'assiette au moyen des propulseurs secondaires correcteurs d'assiette s'avère insuffisante, ledit contrôleur électronique de navigation 30 d'un dispositif de propulsion agit de nouveau sur la puissance des propulseurs principaux pour en accroître ou en réduire l'amplitude du vecteur de poussée.

Généralement les propulseurs principaux sont des moteurs à combustion interne, pour délivrer d'une part la puissance requise pour élever le dispositif de propulsion 10 dans les airs et offrir, d'autre part, une autonomie de fonctionnement suffisante en termes de durée de navigation. Les propulseurs secondaires, quant à eux, sont généralement à commandes électriques, choisis et dimensionnés pour leur réactivité, cette dernière étant meilleure que celle de leurs pairs à combustion interne qui présentent une inertie pénalisante pour stabiliser à eux seuls l'assiette du dispositif de propulsion 10. En revanche, l'autonomie de fonctionnement et la puissance de propulseurs secondaires électriques sont généralement plus faibles que celles des propulseurs thermiques. Il est donc pertinent d'allier les deux types de propulseurs, thermiques (combustion interne) et électriques, pour améliorer la réactivité des systèmes de poussée tout en conservant une autonomie énergétique satisfaisante.

Il résulte d'une telle doctrine fondée sur l'élaboration de commandes successives de la puissance des propulseurs à combustion interne puis de celles des propulseurs électriques, des faibles réactivité et tonicité des dispositifs de propulsion aériens, une stabilisation d'assiette relative, une précision de pilotage clairement perfectible, une autonomie amoindrie des différents propulseurs, les uns étant amenés à corriger les insuffisances ou lacunes des autres. Les traitements mis en oeuvre par un contrôleur électronique de navigation 30 d'un tel dispositif de propulsion aérien 10, afin de générer les commandes de puissance des différents propulseurs principaux 12a, 12b, 12c, 12d et secondaires 19a, 19b, 19c, 19d s'avèrent en outre complexes à concevoir et à mettre en oeuvre pour proposer une évolution satisfaisante dudit dispositif de propulsion aérien 10.

Enfin, il est fait référence au document US 2019/047714 A1 qui décrit un procédé de correction de vecteur de poussée d'un dispositif de propulsion aérien.

L'invention permet de répondre à tout ou partie des inconvénients soulevés par les solutions connues ou précédemment mentionnées.

Parmi les nombreux avantages apportés par l'invention, nous pouvons mentionner que celle-ci permet de :
- proposer des systèmes de poussée alliant autonomie énergétique, puissance et réactivité ;
- simplifier les traitements mis en oeuvre par un contrôleur d'électronique de navigation, ce dernier n'ayant plus qu'à adresser des commandes de poussée à un ou plusieurs systèmes de poussée, quelles que soient les technologies ou les agencements respectifs de ces derniers ;
- décentraliser les traitements de correction de vecteurs de poussée au niveau de chaque système de poussée, pour convertir des commandes de poussée émanant d'un contrôleur électronique de navigation central, en commandes de puissance de propulseurs thermiques (à combustion interne) et/ou d'actionnement de moyens correcteurs électriques de la poussée délivrée par lesdits propulseurs thermiques, de sorte à maximiser la réactivité de chaque système de poussée pour en accroître ou en réduire la poussée délivrée ;
- transposer l'enseignement technique selon l'invention à toute dispositif de propulsion qu'il soit aérien, maritime ou terrestre.

A cette fin, l'invention prévoit un procédé de correction du vecteur de poussée délivré par un groupe de poussée d'un système de poussée, ce dernier comportant en outre des moyens de traitement agencés pour mettre en oeuvre ledit procédé. Un tel groupe de poussée comporte un rotor mécanique mu en rotation par un arbre rotatif d'un moteur à combustion interne en réponse à une commande de puissance.

Un tel procédé comporte itérativement :
- une étape de conversion d'une commande de poussée en une vitesse de rotation de consigne de l'arbre du moteur à combustion interne du groupe de poussée ;
- une étape de production d'un écart entre ladite vitesse de rotation de consigne et la vitesse de rotation mesurée dudit arbre, par un capteur de mesure coopérant avec ledit moteur à combustion interne et avec lesdits moyens de traitement ;
- une étape d'élaboration de la commande de puissance à partir dudit écart entre ladite vitesse de rotation de consigne et la vitesse de rotation mesurée dudit arbre du moteur à combustion interne de sorte à réduire ledit écart et ainsi asservir en vitesse le moteur à combustion interne. ;

Pour proposer un système de poussée alliant autonomie énergétique, puissance et réactivité :
- le système de poussée comporte en outre des moyens électriques correcteurs du vecteur de poussée délivré par ledit groupe de poussée ;
- ledit procédé comporte une étape itérative, indépendante dudit asservissement en vitesse de la rotation de l'arbre du moteur à combustion interne, d'élaboration d'une commande d'actionnement desdits moyens électriques correcteurs de vecteur de poussée à partir dudit écart entre la vitesse de rotation de consigne et la vitesse de rotation mesurée de l'arbre du moteur à combustion interne.

Selon un mode de réalisation préféré, l'étape d'élaboration de la commande de puissance peut consister à produire ladite commande de puissance par multiplication, intégration et/ou dérivation dudit écart entre ladite vitesse de rotation de consigne et la vitesse de rotation mesurée dudit arbre.

Pour maintenir une puissance minimale délivrée par le groupe de poussée indépendamment de la consigne de poussée, un tel procédé peut comporter une étape de correction de la commande de puissance produite de sorte qu'une telle commande de puissance ne soit pas inférieure à un seuil de commande de puissance minimale.

Réciproquement pour limiter la puissance délivrée par le groupe de poussée indépendamment de la consigne de poussée, un procédé selon l'invention peut comporter une étape de correction de la commande de puissance produite de sorte qu'une telle commande de puissance n'excède pas un seuil de commande de puissance maximale.

Selon l'une de ces deux dernières variantes, pour permettre de modifier dynamiquement de tels seuils de commande minimale et/ou maximale, un procédé selon l'invention peut comporter une étape de prise en compte d'une consigne en limitation basse ou haute de la poussée du groupe de poussée et d'initialisation d'un seuil de commande minimale ou maximale.

Selon un mode de réalisation avantageux, l'étape d'actionnement des moyens correcteurs du vecteur de poussée peut consister à produire la commande d'actionnement desdits moyens correcteurs du vecteur de poussée par multiplication, intégration et/ou dérivation dudit écart entre ladite vitesse de rotation de consigne et la vitesse de rotation mesurée de l'arbre du moteur à combustion interne.

Selon un deuxième objet, l'invention concerne un produit programme d'ordinateur comportant une ou plusieurs instructions de programme interprétables par des moyens de traitement d'un ordinateur, lesdites instructions de programme étant chargeables dans une mémoire non volatile de ce dernier, caractérisé en ce que l'exécution desdites instructions par lesdits moyens de traitement provoque la mise en oeuvre d'un procédé de correction de vecteur de poussée selon l'invention.

Selon un troisième objet, l'invention concerne un support de mémorisation lisible par un ordinateur comportant les instructions d'un tel produit programme d'ordinateur.

Selon un quatrième objet, l'invention concerne un système de poussée comportant un groupe de poussée, des moyens électriques correcteurs du vecteur de poussée délivré par ledit groupe de poussée, des moyens de traitement agencés pour mettre en oeuvre un procédé de correction de vecteur de poussée selon l'invention.

Selon un premier mode de réalisation d'un tel système de poussée, le groupe de poussée peut comporter :
- un moteur à combustion interne et à arbre rotatif dont la vitesse de rotation est fonction de la commande de puissance produite par les moyens de traitement ;
- un rotor mécanique mu en rotation par ledit moteur à combustion interne.

Dans ce cas, les moyens électriques correcteurs du vecteur de poussée peuvent comporter :
- un moteur électrique à arbre rotatif dont la vitesse de rotation est fonction de la commande d'actionnement desdits moyens correcteurs produite par les moyens de traitement ;
- un rotor mécanique mu en rotation par ledit moteur électrique et délivrant un vecteur de poussée additionnel sensiblement parallèle au vecteur de poussée délivré par le groupe de poussée.

Selon ce premier mode de réalisation d'un tel système de poussée, ce dernier peut en outre comporter un moteur-générateur mutuellement couplé avec le moteur à combustion interne du groupe de poussée pour transformer tout ou partie de la puissance mécanique générée par ledit moteur à combustion interne en énergie électrique délivrée par ledit moteur-générateur selon une commande d'actionnement dudit moteur-générateur produite par les moyens de traitement.

L'invention prévoir un deuxième mode de réalisation d'un système de poussée selon lequel :
- le groupe de poussée peut comporter un turboréacteur présentant une sortie d'éjection de fluide ;
- les moyens électriques correcteurs du vecteur de poussée peuvent comporter :
   ∘ une paire de guides déflecteurs montés rotatifs et mutuellement agencés pour dévier, en aval de la sortie d'éjection de fluide, tout ou partie du vecteur de poussée du groupe de poussée dans une ou des directions sensiblement normales à la direction dudit vecteur de poussée à la sortie d'éjection de fluide du turboréacteur ;
   ∘ des actionneurs électriques agencés pour interpréter la commande d'actionnement et provoquer respectivement une rotation des guides déflecteurs.

Selon un cinquième objet, l'invention concerne un dispositif de propulsion comportant au moins un système de poussée selon l'invention, ledit dispositif de propulsion comportant des moyens contrôleurs de navigation agencés pour produire une commande de poussée interprétable par les moyens de traitements dudit au moins un système de poussée.

Pour conférer à un dispositif de propulsion aérien une capacité de décollage et d'atterrissage verticaux, ce dernier peut comporter une plateforme agencée pour accueillir une charge, des moyens supports du groupe de poussée dudit au moins un système de poussée, lesdits moyens supports étant agencés pour orienter le vecteur de poussée dudit groupe de poussée selon une direction sensiblement normale à la plateforme.

Avantageusement pour maintenir une puissance minimale ou limiter la puissance délivrée par ledit au moins un groupe de poussée d'un système de poussée conforme à l'invention, les moyens contrôleurs de navigation peuvent être agencés pour élaborer une consigne en limitation basse ou haute de la poussée du groupe de poussée dudit au moins un système de poussée.

Pour abriter ou préserver l'intégrité de la charge véhiculée, un dispositif de propulsion selon l'invention, peut comporter un carénage associé à la plateforme agencé pour protéger ladite charge de l'environnement dudit dispositif de propulsion.

D'autres caractéristiques et avantages apparaîtront plus clairement à la lecture de la description qui suit et à l'examen des figures qui l'accompagnent parmi lesquelles :
- la figure 1, d'ores-et-déjà décrite, illustre un premier dispositif de propulsion connu, agencé pour fournir une capacité de décollage et d'atterrissage sensiblement verticaux ;
- la figure 2, d'ores-et déjà-décrite, illustre un deuxième dispositif de propulsion connu, agencé pour fournir une capacité de décollage et d'atterrissage sensiblement verticaux ;
- la figure 3, d'ores-et-déjà décrite, l'agencement d'un système de poussée d'un tel deuxième dispositif de propulsion connu et illustré par la figure 2 ;
- la figure 4 illustre un exemple non limitatif de réalisation d'un système de poussée d'un dispositif de propulsion aérien conforme à l'invention ;
- la figure 5 illustre un exemple d'un dispositif de propulsion conforme à l'invention, sous la forme avantageuse d'un octocoptère agencé pour véhiculer principalement un passager humain ;
- la figure 6 illustre un premier exemple de description fonctionnelle d'un procédé de correction de vecteur de poussée conforme à l'invention ;
- la figure 7 illustre un deuxième exemple de description fonctionnelle d'un procédé de correction de vecteur de poussée conforme à l'invention ;
- la figure 8 illustre un troisième exemple de description fonctionnelle d'un procédé de correction de vecteur de poussée conforme à l'invention.

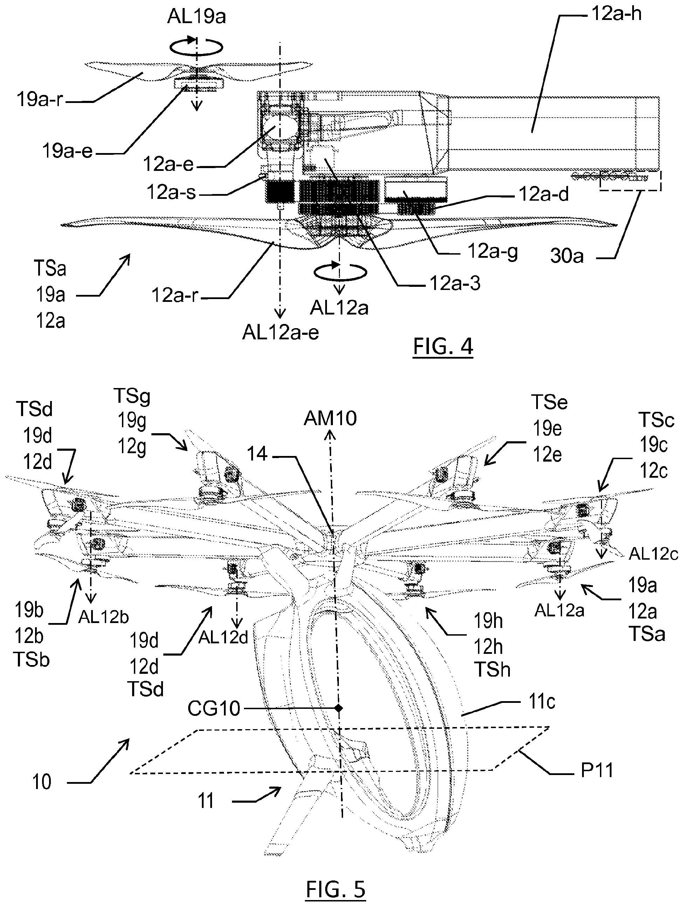

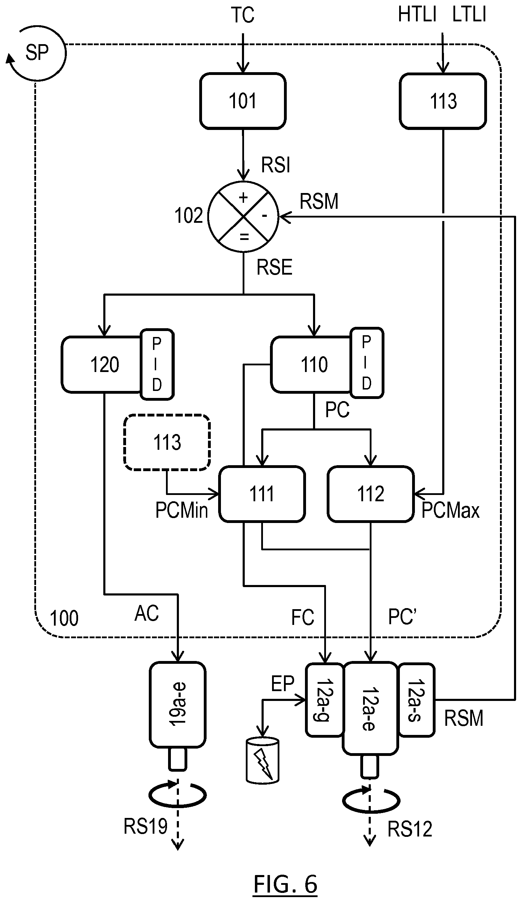

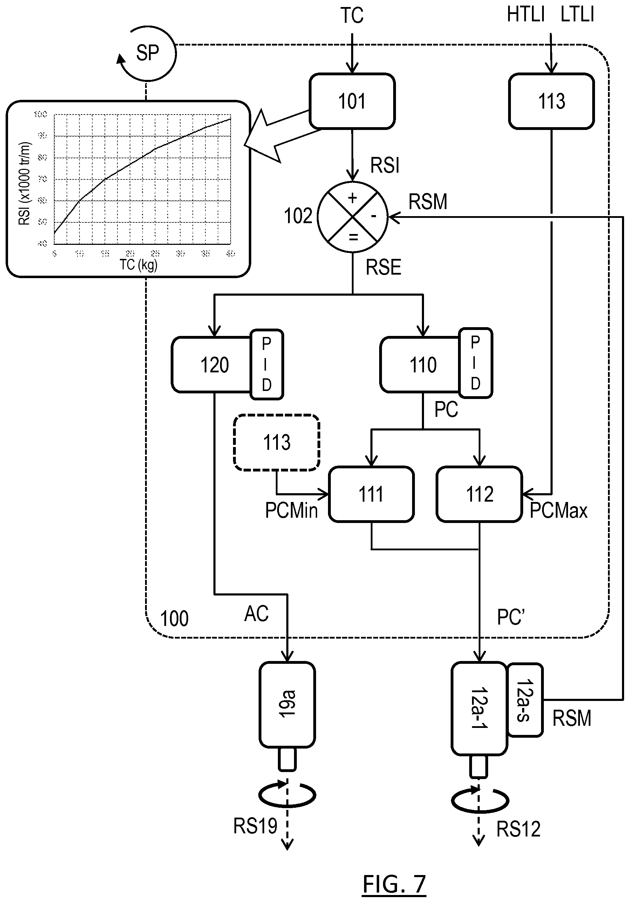

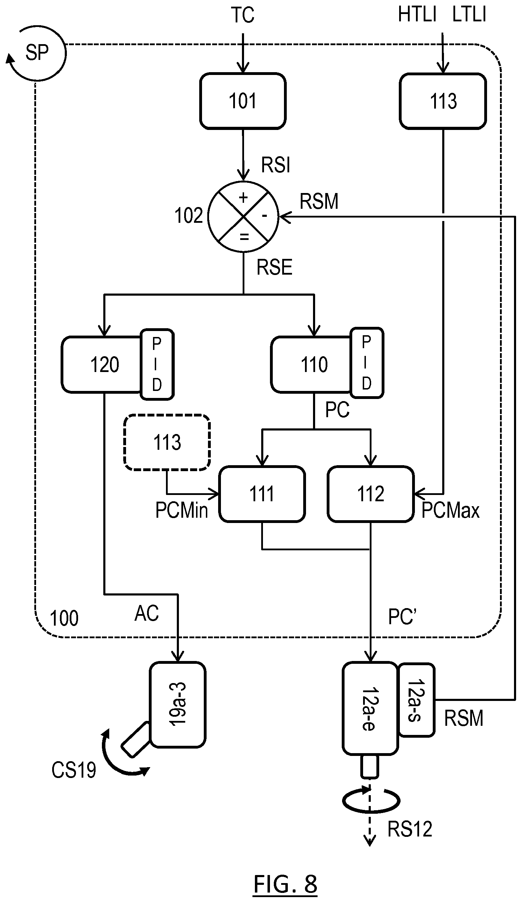

L'invention va être décrite dans un premier temps au travers d'un exemple de réalisation d'un système de poussée TSa particulièrement innovant tel que décrit à titre d'exemple non limitatif par la figure 4. Le procédé de correction d'un vecteur de poussée, tel que le procédé 100 illustré par la figure 6, mis en oeuvre par un tel système de poussée TSa est toutefois exploitable et transposable pour corriger le vecteur de poussée d'autres systèmes de poussée de dispositif de propulsion, tels que les systèmes de poussée illustrés par les figures 1, 2, et 3, après adaptation de ces derniers. Nous étudierons par la suite de telles transpositions en lien avec les figures 7 et 8.

Un système de poussée TSa décrit par la figure 4, permet d'équiper un dispositif de propulsion aérien 10 dont un exemple est illustré par la figure 5. Ce dernier comporte une plateforme 11, que nous pouvons par simplification schématiser par, ou réduire à, un plan P11 sensiblement horizontal lorsque le dispositif de propulsion 10 est posé au sol ou sur un support horizontal. Selon la figure 5, ladite plateforme 11 comporte un carénage ovoïde 11c pour protéger de l'environnement la charge véhiculée par un tel dispositif de propulsion aérien 10, en l'espèce un passager humain, non représenté sur ladite figure 5. Toute autre configuration de la plateforme 11 (ou du plan P11 équivalent) et/ou de son carénage 11c pourrait en lieu et place être retenue pour s'inscrire dans l'application de transport considérée ou selon le type de charge utile que l'on souhaite déplacer. Le dispositif de propulsion aérien 10 comporte des moyens supports 14 décrivant huit bras en étoiles, se faisant face deux à deux. Lesdits bras 14 s'inscrivent dans un même plan sensiblement parallèle au plan P11 symbolisant la plateforme 11, au-dessus de celle-ci. Chaque bras 14 soutient un système de poussée TSa, TSb, TSc, TSd, TSe, TSf, TSg, TSh comprenant principalement, comme nous l'étudierons en lien avec la figure 4, un groupe de poussée 12a, 12b, 12c, 12d, 12e, 12f, 12g, 12h associé à des moyens 19a, 19b, 19c, 19d, 19e, 19f, 19g, 19h correcteurs du vecteur de poussée délivré par ledit groupe de poussée. Ainsi, le dispositif de propulsion 10 est mu par huit systèmes de poussée TSa à TSh comprenant respectivement huit groupes de poussée 12a à 12h associés respectivement à huit moyens 19a à 19h correcteurs des vecteurs de poussée générés par lesdits groupes de poussée. Par mesure de simplification, la figure 5 n'illustre que les vecteurs de poussée AL12a, AL12b, AL12c, AL12d générés respectivement par les groupes de poussée 12a, 12b, 12c et 12d. Lesdits bras 14 peuvent en outre enceindre des éléments complémentaires et nécessaires au fonctionnement desdits groupes de poussée 12a à 12h et moyens 19a à 19h correcteurs de vecteurs de poussée qu'ils supportent respectivement. Nous pouvons citer comme éléments complémentaires, à titre d'exemples non limitatifs, des ensembles d'échappement des gaz usés générés par les moteurs à combustion interne des groupes de poussée, des batteries ou super-condensateurs délivrant de l'énergie électrique nécessaires aux moyens correcteurs de vecteurs de poussée et/ou moyens électroniques de traitement desdits systèmes de poussée, les conduits d'alimentation en énergie fossile des moteurs à combustion interne, les câblages électriques, etc. Comme l'indique la figure 5, les systèmes de poussée sont soutenus par les bras supports 14 de telle manière que les groupes de poussée respectifs puissent délivrer des vecteurs de poussée sensiblement normaux au plan P11. De cette manière, le dispositif de propulsion 10 est avantageusement configuré pour offrir des décollages et atterrissages verticaux.

La figure 4 décrit un premier exemple préféré d'un système de poussée TSa comportant un groupe de poussée 12a et des moyens 19a correcteurs d'un vecteur de poussée AL12a généré par ledit groupe de poussée 12a.

Selon ce premier mode de réalisation le groupe de poussée 12a comporte un moteur 12a-e à combustion interne et à arbre rotatif, en l'espèce sur la figure 4 un moteur à deux temps, dont la vitesse de rotation de l'arbre, ou régime moteur, est fonction d'une commande de puissance.

Un moteur à deux temps comporte un ou des pistons qui se déplacent dans autant de cylindres, en l'espèce deux selon l'exemple illustré par les figures 4 et 5, et effectuent un cycle complet de combustion en seulement deux mouvements linéaires. Le déplacement linéaire d'un piston dans un cylindre, permet d'évacuer des gaz brûlés et de remplir ledit cylindre de gaz frais ou mélange consistant en une vapeur de carburant et d'un comburant (air) via une boîte à clapets. Le cycle de déplacement d'un tel piston au sein du cylindre qui l'héberge peut être résumé comme suit. Une première étape dite « détente » consiste, alors que le piston occupe une position haute au sein du cylindre, à ce qu'une bougie d'allumage provoque la combustion dudit mélange chassant le piston qui comprime ledit mélange présent dans un carter sous ledit piston. C'est la partie motrice du cycle, le reste de la course dudit piston au sein dudit cylindre étant dû à l'inertie d'un vilebrequin créée par cette détente. Durant la descente du piston dans le cylindre, l'entrée du mélange dans le carter se ferme. Arrivé à proximité d'un point mort bas, le piston libère des lumières d'échappement et de transfert de mélange dans le cylindre. Le mélange en pénétrant dans le cylindre chasse les gaz de la combustion. Il s'agit de l'étape dite « d'admission - échappement ». En remontant, le piston compresse le mélange dans le cylindre, tout en occultant l'échappement et l'entrée de mélange dans le cylindre. Une dépression dans le carter est ainsi créée et va permettre l'arrivée dudit mélange dans ledit carter via une lumière d'admission. Cette étape est dite de « compression ». Un nouveau cycle peut être provoqué. Pour réguler le régime du moteur, un volet de gaz régule la quantité d'air admise dans le mélange, via un carburateur. Pour ouvrir ou fermer un tel volet de gaz, un actionneur 12a-3 est mobilisé. Plus ledit volet de gaz est ouvert, plus le régime du moteur est élevé, plus ledit volet est fermé plus le régime du moteur décroit jusqu'à fonctionner au ralenti. Dans le cadre de l'invention, une commande de puissance PC peut être élaborée et traduite par un tel actionneur 12a-3 du volet de gaz. Il peut consister en un servomoteur ou un moteur électrique à came dont la course entraîne l'ouverture ou la fermeture progressive dudit volet de gaz.

Selon la figure 4, le moteur 12a-e à combustion interne et à arbre rotatif, meut en rotation un rotor mécanique 12a-r, ce dernier étant couplé à l'arbre rotatif du moteur à combustion interne. Comme l'indique la figure 4, un tel couplage peut être réalisé indirectement via un moyen démultiplicateur 12a-d, par exemple via une courroie coopérant avec une première poulie, fixée sur l'arbre rotatif du moteur 12a-e, et une deuxième poulie d'un diamètre supérieur à celui de la première poulie, fixée sur l'arbre dudit rotor 12a-r. Un tel couplage peut être réalisé par tout autre moyen structurellement différent mais assurant une fonction équivalente, tel qu'une boîte de vitesse par exemple, pour régler dynamiquement le rapport de démultiplication de la vitesse de rotation de l'arbre rotatif du moteur à combustion interne 12a-e. La figure 4 présente en outre des moyens de traitement 30a, connectables par un bornier de sorte que ces derniers puissent être physiquement distants des éléments structurels du système de poussée, pour mettre en oeuvre un procédé de correction du vecteur de poussée AL12a délivré par le groupe de poussée 12a du système de poussée TSa. Nous décrirons un tel procédé en lien avec un exemple 100 illustré avec la figure 6, pour produire notamment la commande de puissance PC interprétable par l'actionneur 12a-3 du volet des gaz du moteur 12a-e à combustion interne. La figure 4 illustre par ailleurs les moyens d'échappement 12a-h pour évacuer les gaz brûlés par ledit moteur à combustion interne 12a-e.

Lesdits moyens de traitement 30a peuvent avantageusement se présenter sous la forme d'un ou plusieurs microcontrôleurs ou microprocesseurs. Ce ou ces derniers coopère(nt) notamment avec une mémoire de données pour enregistrées ou lire des données élaborées par la mise en oeuvre dudit procédé de correction du vecteur de poussée ainsi que des paramètres de fonctionnement, ou plus généralement toutes données produites ou préenregistrées, qu'elles consistent en des données intermédiaires ou de résultats relatifs à des commandes d'actionneurs. De tels moyens de traitement 30a comportent en outre, une mémoire de programmes pour enregistrer des instructions d'un programme d'ordinateur dont l'exécution provoque la mise en oeuvre de procédés, dont le procédé de correction de vecteur de poussée conforme à l'invention. On entend par « mémoire de données ou de programmes » toute mémoire informatique volatile ou, avantageusement, non volatile. Une mémoire non volatile est une mémoire informatique dont la technologie permet de conserver ses données en l'absence d'une alimentation en énergie électrique. Elle peut contenir des données résultant de saisies, de calculs, de mesures et/ou des instructions de programmes. Les principales mémoires non volatiles actuellement disponibles peuvent être inscriptibles et/ou effaçables électriquement. Elles s'appuient sur les technologies EPROM (« Erasable Programmable Read-Only Memory », selon une terminologie anglo-saxonne), EEPROM (« Electrically-Erasable Programmable Read-Only Memory »), flash, SSD (« Solid-State Drive », selon une terminologie anglo-saxonne), etc. Les mémoires « non volatiles » se distinguent des mémoires dites « volatiles » dont les données sont perdues en l'absence d'une alimentation électrique. Les principales mémoires volatiles actuellement disponibles sont de type RAM (« Random Access Memory » selon une terminologie anglo-saxonne ou encore nommée « mémoire vive »), DRAM (mémoire vive dynamique, nécessitant une réactualisation régulière), SRAM (mémoire vive statique nécessitant une telle réactualisation lors d'une sous-alimentation électrique), DPRAM ou VRAM (particulièrement adaptées à la vidéo), etc. Une « mémoire de données », dans la suite du document, peut être volatile ou non volatile.

Pour modifier l'amplitude ou la force du vecteur de poussée AL12a généré par l'actionnement du rotor 12a-r, la figure 4 illustre des moyens correcteurs 19a dudit vecteur de poussée AL12a. Ces derniers consistent en un moteur électrique 19a-e à arbre rotatif dont la vitesse de rotation est fonction d'une commande d'actionnement produite par les moyens de traitement 30a. Un tel moteur électrique 19a-e est agencé pour coopérer avec un rotor mécanique 19a-r et le mouvoir en rotation. Ce faisant, ce dernier crée un vecteur de poussée additionnel AL19a sensiblement parallèle, voire coaxial, au vecteur de poussée AL12a délivré par le groupe de poussée 12a, plus précisément le rotor 12a-r. De manière avantageuse, les deux rotors 12a-r et 19a-r sont conjointement montés rotatifs, c'est-à-dire qu'ils sont mus en rotation dans un même sens horaire ou antihoraire. Les moyens supports 14 du système de poussée TSa, non représentés sur la figure 4, peuvent être agencés pour que les deux rotors 12a-r et 19a-r soient désaxés l'un de l'autre, c'est-à-dire non confondus. Par exemple, le rotor 19a-r peut être avantageusement excentré de sorte que le vecteur de poussée AL19a généré par ce dernier soit éloigné d'un axe AM10 normal à une plateforme 11 passant par le centre de gravité CG10 d'un dispositif de propulsion aérien tel que le dispositif 10 décrit en lien avec la figure 5, à l'instar du vecteur de poussée AL12a du dispositif de propulsion 10 décrit en lien avec la figure 1. A contrario, le vecteur de poussée AL12a délivré par le rotor 12a-r peut être avantageusement plus proche d'un tel axe AM10, à l'instar du vecteur de poussée AL12a du dispositif 10 décrit en lien avec la figure 1. Cet agencement permet de réduire toutes interactions ou perturbations des flux mutuellement générés par les deux rotors 12a-r et 19a-r lorsque ces derniers sont sensiblement coaxiaux. L'invention ne saurait être limitée par ces seuls exemples de disposition mutuelle desdits deux rotors 12a-r et 19a-r.

Selon le premier mode de réalisation d'un système de poussée TSa selon la figure 4, ce dernier peut en outre comporter un moteur-générateur 12a-g, celui-ci étant couplé au moteur à combustion interne 12a-e du groupe de poussée 12a pour transformer tout ou partie de la puissance mécanique générée par ledit moteur à combustion interne 12a-e en énergie électrique délivrée par ledit moteur-générateur 12a-g.

Tel qu'illustré par la figure 4, le moteur à combustion interne 12a-e est couplé mécaniquement à un tel moteur-générateur 12a-g. À cet effet, le rotor dudit moteur-générateur 12a-g est couplé, par exemple fixé par une liaison de type encastrement, à l'arbre rotatif du moteur à combustion interne 12a-e. Un tel couplage mécanique entre le moteur à combustion interne 12a-e et le moteur-générateur 12a-g pourrait en variante être indirect. Ainsi, ledit moteur-générateur 12a-g pourrait coopérer par un entraînement par courroie avec ledit arbre rotatif du moteur à combustion interne, voire avec l'arbre du rotor mécanique 12a-r mu par ledit moteur à combustion interne 12a-e. Un tel moteur-générateur 12a-g peut être électriquement connecté à un convertisseur ou régulateur de vitesse électronique (« Electronic Speed Control » ou ESC selon une terminologie anglo-saxonne), qui se comporte, schématiquement, comme une impédance variable en réponse à une commande d'actionnement. De telle manière, selon une commande d'actionnement, ledit moteur-générateur 12a-g peut agir en tant que frein ou ralentisseur progressif, voire intense et soudain, de la vitesse de rotation de l'arbre du moteur à combustion interne 12a-e et ainsi réduire la force du vecteur de poussée AL12a. En effet, à haute impédance, tout champ électromagnétique entre le stator et le rotor du moteur-générateur 12a-g, est annulé ou faible n'engendrant pas de résistance à l'encontre de la rotation du rotor du moteur-générateur. A contrario, à faible impédance, le courant induit un fort champ électromagnétique entre le stator et le rotor du moteur-générateur 12a-g tendant à ralentir la vitesse de rotation relative entre lesdits stator et rotor du moteur-générateur 12a-g et, par voie de conséquence, la vitesse de l'arbre rotatif du moteur à combustion interne 12a-e. On peut donc parler d'un « freinage variable à commande électrique » procuré par le moteur-générateur 12a-g à l'arbre du moteur à combustion interne 12a-e, un tel freinage étant fonction d'une commande d'actionnement produite par les moyens de traitement 30a. Selon un mode de réalisation avantageux, le convertisseur ou ESC peut être bidirectionnel pour autoriser l'injection d'un courant entrant audit moteur-générateur 12a-g de sorte que ce dernier se comporte, non plus en générateur de courant ou alternateur mais en moteur électrique ou démarreur. De cette façon, les moyens de traitement 30a peuvent provoquer aisément et électroniquement le démarrage du moteur à combustion interne 12a-e.

Pour animer un tel système de poussée TSa, l'invention prévoit une mise en oeuvre, avantageusement décentralisée (c'est-à-dire que chaque système de poussée comporte des moyens de traitement 30a agencés à cet effet), d'un procédé 100 de correction d'un vecteur de poussée tel qu'illustré, à titre d'exemple préféré mais non limitatif, par la figure 6.

Les systèmes de poussée connus, par exemple ceux d'ores et déjà décrits en lien avec les figures 1, 2 et 3, comportent des propulseurs principaux à combustion interne 12a1, voire des groupes de poussée 12a, 12b comportant éventuellement plusieurs propulseurs à combustion interne 12a1. Ces derniers, sont, conjointement ou individuellement, pilotés directement de manière centralisée par un contrôleur électronique de navigation 30. Ce dernier consiste généralement en un ou des microprocesseurs exécutant des instructions de programme pour provoquer la mise en oeuvre d'un procédé de contrôle de navigation. En outre, de tels systèmes de poussée comportent des moyens de correction d'assiette déclenchés automatiquement en réponse à des consignes de pilotage et/ou des données délivrées par une centrale inertielle, afin de stabiliser une assiette d'un dispositif de propulsion aérien, généralement indépendamment de la puissance développée par les propulseurs à combustion interne. Certains contrôleurs électroniques de navigation connus 30 provoquent une élévation du dispositif de propulsion aérien 10, ce dernier décrivant une assiette incertaine ou peu stable, en actionnant tout d'abord les propulseurs à combustion interne du ou des groupes de poussée. La précision et la réactivité de ces derniers étant toute relatives, des moyens électriques de correction d'assiette sont alors déclenchés par le contrôleur électronique de navigation 30 pour tenter de compenser un déficit ou retard de puissance de tel ou tel groupe de poussée, dans la limite des capacité desdits moyens correcteurs, quitte à ce que ledit contrôleur électronique de navigation 30 intervienne à nouveau pour accroître ou réduire la puissance de tel ou tel groupe de poussée si la correction d'assiette se révèle insuffisante. Compte tenu des faibles réactivités et précisions, d'ores et déjà évoquées, des propulseurs à combustion interne desdits groupes de poussée, un tel nouvel ajustement de la puissance de ces derniers provoque immanquablement de nouvelles corrections d'assiette à « gommer » ou atténuer par les moyens électriques correcteurs dans la limite de leurs capacités, et ainsi de suite.

Un système de poussée selon l'invention se distingue de l'art antérieur à plusieurs titres.

Tout d'abord, les moyens de traitement électroniques 30a propres audit système de poussée tel que le système TSa illustré par la figure 4, sont agencés pour mettre en oeuvre un procédé de correction d'un vecteur de poussée d'un système de poussée tel que le procédé 100 illustré par la figure 6. Celui-ci consiste à analyser des commandes de poussée TC émanant d'un contrôleur électronique de navigation 30 pour traduire ces dernières en commandes de puissance PC, PC' du ou des groupes de poussée compris dans ledit système de poussée TSa. L'aspect « traduction » est important car on ne commande pas la puissance développée par un moteur thermique à deux ou quatre temps de manière identique à celle développée par un turboréacteur. Il y a donc une décentralisation de la mise en oeuvre des traitements des commandes de poussée TC élaborées par un contrôleur électronique de navigation 30 de sorte que ce dernier soit déchargé de la production de commandes de puissance PC, PC' spécifiques, compte tenu de la variabilité de constitution ou de conception des systèmes de poussée.

En variante, l'invention prévoit, que les moyens de traitement 30a propres à un système de poussée, puissent être confondus avec ceux 30 mettant en oeuvre le programme de contrôle de navigation. Toutefois, quand bien même, les moyens électroniques (microprocesseurs, mémoires) soient mutualisés et/ou ne constituent qu'une seule et même entité physique, la conception du procédé de contrôle de navigation peut s'appuyer sur des bibliothèques spécifiques à tel ou tel système de poussée, encodant des instructions de programme traduisant un procédé de contrôle de vecteur de poussée 100 tel que celui illustré par la figure 6. La conception du contrôleur électronique de navigation 30, ou du programme traduisant le procédé de contrôle de navigation mis en oeuvre par celui-ci, s'en trouve simplifiée et devient interopérable ou indépendante de la technologie des systèmes de poussée.

Un procédé de contrôle de vecteur de poussée conforme à l'invention, tel que le procédé 100 illustré par la figure 6, se distingue également de l'état de la technique en qu'il provoque la mise en oeuvre d'un asservissement en vitesse de rotation de l'arbre du ou des moteurs à combustion interne 12a-e d'un groupe de poussée 12a.

Un tel asservissement vise à ce que la vitesse de rotation RSM de l'arbre du moteur à combustion interne12a-e atteigne, le plus rapidement possible, une valeur de consigne RSI puis à maintenir celle-ci, quelles que soient les perturbations externes éventuelles. Un procédé 100 selon l'invention comporte pour cela une première étape 101 pour traduire une commande de poussée TC, émanant d'un contrôleur de navigation, en une vitesse de rotation de consigne RSI de l'arbre du moteur à combustion interne. Une telle étape 101 peut consister en la mise en oeuvre d'une fonction prédéterminée selon les caractéristiques intrinsèques du moteur à combustion interne, décrivant une telle conversion d'une commande de poussée TC, par exemple exprimée en kilogrammes de poussée, en une rotation de consigne RSI exprimée en tours par minute.

Un tel procédé 100 comporte en outre une étape 102 pour comparer ladite vitesse de rotation de consigne RSI et la vitesse de rotation mesurée RSM dudit arbre du moteur à combustion interne12a-e par un capteur de mesure (référencé 12a-s sur la figure 4, bien que n'étant pas explicitement visible sur ladite figure 4) coopérant avec ledit moteur à combustion interne 12a-e et avec lesdits moyens de traitement 30 ou 30a. Un tel capteur peut consister en une roue incrémentale ou codeuse fixée sur ledit arbre ou tout autre capteur adapté pour délivrer une telle mesure, par exemple un capteur à effet hall, optique ou à courant de Foucault. L'étape 102 consiste alors à produire un écart RSE entre ladite vitesse de rotation de consigne RSI et ladite vitesse de rotation mesurée RSM dudit arbre du moteur à combustion interne 12a-e.

Le procédé 100 comporte à présent une étape 110 d'élaboration de la commande de puissance PC du moteur à combustion interne 12a-e du groupe de poussée 12a. Une telle étape 110 est agencée pour réduire ledit écart RSE entre ladite vitesse de rotation de consigne RSI et la vitesse de rotation mesurée RSM dudit arbre du moteur à combustion interne 12a-e et ainsi permettre d'asservir en vitesse le moteur à combustion interne 12a-e. Plus précisément, une telle commande de puissance PC est destinée à être interprétée, selon l'agencement du système de poussée TSa illustré par la figure 4, à l'actionneur 12a-3 du volet des gaz d'admission du moteur à deux temps 12a-e modifiant le régime dudit moteur.

Une telle commande de puissance PC peut être élaborée à l'étape 110 par multiplication, intégration et/ou dérivation de l'écart RSE entre ladite vitesse de rotation de consigne RSI et la vitesse de rotation mesurée RSM dudit arbre. Une telle étape 110 résulte alors en la mise en oeuvre d'un algorithme, connu sous le terme « correcteur PID », acronyme de « Proportionnel, Intégral, Dérivé ». Ladite commande PC peut ainsi être calculée comme étant proportionnelle à l'écart RSE, ce dernier pouvant être associé à un premier facteur ou gain multiplicatif, par exemple compris entre un vingtième et un cinquantième, ou toute autre valeur idoine. En variante ou en complément, ledit écart RSE peut être intégré et divisé par un deuxième facteur ou gain pour produire ladite commande de puissance PC. Enfin, en variante ou en complément, un tel écart RSE peut être dérivé et multiplié par un troisième facteur ou gain. De cette manière, ladite commande de puissance PC peut être proportionnelle à l'écart RSE et ou tenir compte de la variation dudit écart au cours du temps.

Un tel procédé 100 est itératif selon une période temporelle donnée SP. Ladite période d'itération, notamment de prise en compte des mesures dudit capteur de vitesse de l'arbre rotatif du moteur à combustion interne 12a-e est primordiale pour tenter de réduire au plus vite l'écart RSE au cours du temps. A titre avantageux, on pourra choisir une période temporelle SP comprise entre quelques millisecondes à quelques secondes, par exemple une période de vingt millisecondes.

Un procédé 100 de contrôle de vecteur de poussée selon l'invention se distingue en outre de l'art antérieur en ce qu'il comporte, parallèlement et indépendamment du processus d'asservissement en vitesse de l'arbre du moteur à combustion interne (via la mise en oeuvre itérative de l'étape 110), une étape 120 d'élaboration de commandes d'actionnement AC, des moyens correcteurs 19a de vecteur de poussée du système de poussée, tel que le système TSa illustré par la figure 4. L'étape 120 est agencée pour élaborer, selon la période temporelle SP, des commandes d'actionnement AC à partir de l'écart RSE entre la vitesse de consigne RSI, tirée de l'étape 101, et la vitesse mesurée RSM de l'arbre du moteur à combustion interne 12a-e, ledit écart RSE étant calculé à l'étape 102. L'objectif de cette étape 120 est de compenser principalement la faible réactivité du moteur à combustion interne 12a-e durant l'asservissement en vitesse de celui-ci sans intervenir sur la régulation en tant que telle de la vitesse en rotation de l'arbre du moteur à combustion interne 12a-e. L'actionnement 120 des moyens correcteurs 19a de vecteur de poussée est donc indépendante de l'asservissement, en tant que tel, en vitesse du moteur à combustion interne. En liaison avec l'exemple du système de poussée TSa illustré par la figure 4, l'invention prévoit des moyens électriques 19a correcteurs du vecteur de poussée AL12a généré par le rotor 12a-r mu par le moteur à combustion interne 12a-e. De tels moyens électriques correcteurs 19a peuvent consister avantageusement en un moteur à arbre rotatif électrique 19a-e entraînant en rotation un rotor mécanique 19a-r. Un tel moteur électrique 19a-e intègre généralement un convertisseur traduisant une consigne d'activation électrique graduée en en vitesse de rotation RS19 de son arbre. Du fait de sa conception, le moteur électrique 19a-e est beaucoup plus réactif que le moteur à combustion interne 12a-e. Il peut générer un vecteur de poussée AL19a additionnel au vecteur AL12a généré par le rotor 12a-r mu par ledit moteur à combustion interne 12a-e. Un actionnement soudain et adapté du moteur électrique 19a-e permet, dans une phase d'accélération du régime du moteur à combustion interne 12a-e, d'obtenir très rapidement un vecteur de poussée, résultant de la conjonction ou combinaison des vecteurs de poussées AL12a et AL19a, d'une amplitude ou force identique à celle que décrirait virtuellement un vecteur de poussée AL12a si le moteur à combustion interne était doté d'une réactivité quasi instantanée. Bien évidemment, au fur et à mesure de la mise en oeuvre de l'asservissement en vitesse dudit moteur à combustion (étape 110), celui-ci tend à atteindre la vitesse de rotation de consigne RSI. Grâce à une mise en oeuvre itérative de l'étape 120, la puissance développée par le moteur électrique 19a-e décroit sous l'effet de la mise à jour de la commande d'actionnement AC qui est fonction de l'écart RSE, jusqu'à laisser « en roue libre » le rotor 19a-r et ne laisser actif que le rotor 12a-r mu par le moteur thermique 12a-e. Par la mise en oeuvre itérative, selon la période SP, du procédé 100, le moteur électrique 19a-e est à nouveau sollicité dès qu'un écart RSE est à nouveau positif (c'est-à-dire dès que la vitesse de rotation RS12 de l'arbre rotatif du moteur à combustion interne 12a-e devient inférieure à la vitesse de consigne RSI) et significatif (on entend par « écart significatif » un écart dont la valeur absolue provoque un actionnement des moyens correcteurs 19a). Ainsi, l'invention prévoit que l'étape 120 soit agencée pour produire itérativement une commande d'actionnement AC desdits moyens correcteurs du vecteur de poussée 19a-e par multiplication, intégration et/ou dérivation de l'écart RSE entre la vitesse de rotation de consigne RSI et la vitesse de rotation mesurée RSM de l'arbre du moteur à combustion interne 12a-e. Selon un mode de réalisation préféré, l'accent est mis, intégralement ou majoritairement, sur une commande d'actionnement obtenue proportionnellement audit écart RSE. Le calcul 120 de la commande d'actionnement AC peut en outre exploiter un modèle paramétrique de la réactivité du moteur à combustion interne 12a-r de sorte que le vecteur de poussée du système de poussée Tsa, résultant de la combinaison des vecteurs de poussée AL19a et AL12a générés respectivement par les rotations conjuguées des rotors 19a-r et 12a-r mus respectivement par le moteur électrique 19a-e et le moteur à combustion interne 12a-e, décrive une amplitude de poussée la plus constante possible durant le processus d'asservissement en vitesse dudit moteur à combustion interne et prévienne toute surcompensation du vecteur de poussée AL12a.

La mise en oeuvre du procédé 100 permet ainsi d'adjoindre un vecteur de poussée AL19a additionnel pour compenser une croissance lente de l'amplitude du vecteur de poussée AL12a généré par le moteur à combustion interne 12a-e du groupe de poussée 12a.

Un moteur à combustion interne, tel qu'un moteur à deux temps ou à quatre temps, obère d'autant plus sa réactivité lorsque son régime moteur décroit en deçà d'un certain seuil. Il est donc avantageux, de conserver un régime moteur supérieur ou égal à un tel seuil en limite basse. Pour cela, un procédé 100 selon l'invention peut comporter une étape 113 de prise en compte d'une consigne LTLI en limitation basse de poussée du moteur à combustion interne 12a-e, ou plus généralement du groupe de poussée 12a et produire une valeur de seuil de commande de puissance minimale PCMin, inscrite dans la mémoire de données des moyens de traitement 30 ou 30a mettant en oeuvre ledit procédé 100. Une telle consigne LTLI peut être élaborée par les moyens électroniques contrôleurs de navigation 30. En variante ou en complément, un tel seuil PCMin peut être le reflet d'un paramétrage de mise en oeuvre dudit procédé 100, et ainsi constituer une valeur par défaut ou prédéterminée inscrite dans ladite mémoire de données. Le procédé 100 comporte alors une étape 111 consistant à lire, dans la mémoire de données des moyens de traitement 30, 30a, la valeur d'un tel seuil PCMin décrivant une commande de puissance limite en deçà de laquelle le régime du moteur à combustion interne 12a-e serait trop faible pour conserver une réactivité satisfaisante. Ladite étape 111 consiste à comparer la commande de puissance PC produite à l'étape 110 à la valeur de seuil PCMin, et à produire une commande de puissance corrigée PC' égale à ladite commande de puissance produite PC lorsque celle-ci est supérieure à ladite commande de puissance limite PCMin ou égale à cette dernière dans le cas contraire. L'étape 111 est ainsi agencée de sorte qu'en réponse à une telle commande de puissance PC' éventuellement corrigée, le régime du moteur à combustion 12a-e ne descende pas en deçà d'un seuil en limitation basse.

Réciproquement, l'invention prévoit que l'étape 113, ou en variante une étape dédiée à cet effet, prenne en compte une consigne HTLI en limitation haute de la poussée du groupe de poussée et de production d'une valeur de seuil de commande de puissance maximale PCMax, inscrite dans la mémoire de données des moyens de traitement mettant en oeuvre ledit procédé 100. Une telle consigne HTLI peut être élaborée par les moyens contrôleurs de navigation 30. En variante ou en complément, un tel seuil PCMax peut être le reflet d'un paramétrage de mise en oeuvre dudit procédé 100, et ainsi constituer une valeur par défaut ou prédéterminée inscrite dans la mémoire de données. Un procédé 100 selon l'invention peut alors comporter une étape 112 consistant à lire, dans la mémoire de données des moyens de traitement mettant en oeuvre ledit procédé (tels que les moyens 30 ou 30a), la valeur d'un tel seuil PCMax décrivant une commande de puissance maximale. Ladite étape 112 peut consister à comparer la commande de puissance PC produite à l'étape 110 à la valeur dudit seuil PCMax et à produire une commande de puissance corrigée PC' égale à ladite commande de puissance produite PC lorsque celle-ci est inférieure à ladite commande de puissance limite PCMax ou égale à cette dernière dans le cas contraire. L'étape 112 est ainsi agencée de sorte qu'en réponse à une telle commande de puissance PC' éventuellement corrigée, le régime du moteur à combustion 12a-e n'excède pas un seuil en limitation haute. En effet, plus le régime d'un moteur à combustion interne est élevé plus le niveau sonore qu'il produit est haut. Un tel niveau sonore peut être pénalisant ou incommodant en phase de décollage ou d'atterrissage d'un dispositif de propulsion aérien tel que celui illustré par la figure 5. En revanche, le niveau sonore du fonctionnement d'un moteur électrique, même à haut régime, est plus faible. Limiter la commande de puissance PC à un seuil haut PCMax, quand bien même ladite commande de puissance PC produite à l'étape 110 est supérieure audit seuil PCMax, maintient un écart RSE positif que ne peut compenser l'asservissement du moteur à combustion interne mais qui est compensable par l'actionnement du moteur électrique correcteur du vecteur de poussée 19a-e sous l'effet d'une commande d'actionnement AC proportionnelle audit écart RSE. Le rotor 19a-r mu par le moteur électrique 19a-e compense alors le déficit du vecteur de poussée résultant du système de poussée 12a et permet une phase de décollage ou d'atterrissage d'un dispositif de propulsion équipé dudit système de poussée, à faible niveau sonore. La consigne HLTI peut être annulée par les moyens contrôleurs de navigation 30 lorsque qu'une hauteur ou plus généralement une distance de navigation raisonnable est atteinte depuis le lieu de départ. L'étape 112 visant à écrêter la commande puissance PC cesse alors de produire ses effets, le moteur à combustion interne recouvrant une plage de régime moteur plus étendue.

L'invention prévoit en outre d'adapter l'étape 110 produisant la commande puissance PC ou, en variante de comporter une étape distincte de ladite étape 110, pour produire une commande d'actionnement FC de moyens électriques de freinage visant à plus rapidement ajuster, que par la simple mise en oeuvre de l'étape itérative 110 telle que décrite précédemment, la vitesse de rotation RS12 de l'arbre dudit moteur à combustion interne 12a-e à une vitesse de consigne RSI qui lui soit inférieure. A l'instar de l'accélération du régime de ce moteur, la décélération de ce dernier est peu réactive. Selon l'exemple de réalisation décrit en lien avec la figure 4, le groupe de poussée 12a peut comporter un moteur-générateur 12a-g couplé à l'axe rotatif du moteur à combustion interne 12a-e pour transformer tout ou partie de la puissance mécanique développée par ledit moteur à combustion interne 12a-e en énergie électrique EP, celle-ci pouvant être stockée dans une batterie ou un supercondensateur. En pilotant, par la génération itérative de commandes d'actionnement FC adaptées au convertisseur ou régulateur de vitesse électronique du moteur-générateur 12a-g, un « freinage variable à commande électrique » est appliqué par ledit moteur-générateur 12a-g à l'arbre rotatif du moteur à combustion interne 12a-e, un tel freinage étant fonction de la commande d'actionnement FC produite à l'étape 110 ainsi modifiée. A l'instar des commandes d'actionnement AC dont l'élaboration 120 a été précédemment décrite, l'étape 110 peut en outre consister à élaborer des commandes d'actionnement FC du moteur-générateur 12a-g à partir de l'écart RSE calculé à l'étape 102 entre vitesse de consigne RSI (tirée de l'étape 101) et vitesse mesurée RSM de l'arbre du moteur à combustion interne 12a-e. L'objectif de cette étape 110 modifiée consiste à compenser la faible réactivité du moteur à combustion interne 12a-e en phase de décélération et contribue ainsi au processus d'asservissement de ce dernier. Du fait de sa conception, le moteur-générateur électrique 12a-g est beaucoup plus réactif que le moteur à combustion interne 12a-e. Il peut freiner rapidement la rotation de l'arbre rotatif du moteur à combustion interne 12a-e. Bien évidemment, au fur et à mesure de la mise en oeuvre de l'asservissement en vitesse dudit moteur à combustion 12a-e combiné au freinage délivré par le moteur-générateur 12a-g, ledit moteur à combustion 12a-e tend à atteindre la vitesse de rotation de consigne RSI. La puissance de freinage développée par le moteur-générateur électrique 12a-g décroit sous l'effet de la mise à jour de la commande d'actionnement FC qui est fonction de l'écart RSE, jusqu'à libérer de toute emprise le rotor 12a-r mu par le moteur à combustion interne 12a-e. Par la mise en oeuvre itérative, selon la période SP, du procédé 100, le moteur-générateur 12a-g est à nouveau sollicité dès qu'un écart RSE est à nouveau négatif (c'est-à-dire dès que la vitesse de rotation RS12 de l'arbre rotatif du moteur à combustion interne 12a-e devient supérieure à la vitesse de consigne RSI) et significatif (c'est-à-dire suffisant en valeur absolue pour provoquer un freinage par le moteur-générateur 12a-g). L'invention prévoit que l'étape 110, ou une étape distincte de celle-ci, puisse être agencée pour produire itérativement une commande d'actionnement FC desdits moyens de freinage électrique 12a-g par multiplication, intégration et/ou dérivation de l'écart RSE entre la vitesse de rotation de consigne RSI et la vitesse de rotation mesurée RSM de l'arbre du moteur à combustion interne 12a-e. Selon un mode de réalisation préféré, l'accent est mis, intégralement ou majoritairement, sur une commande d'actionnement obtenue proportionnellement audit écart RSE. Le calcul 110 de la commande d'actionnement FC peut en outre exploiter un modèle de la réactivité du moteur à combustion interne 12a-r de sorte que le vecteur de poussée du système de poussée TSa, résultant de la combinaison du vecteur de poussée AL12a généré par le rotation du rotor 12a-r mus par le moteur à combustion interne 12a-e et le freinage opéré par le moteur-générateur 12a-g, décrive une amplitude de poussée la plus réactive possible durant le processus d'asservissement en vitesse de l'arbre dudit moteur à combustion interne.

Un procédé 100 de correction de vecteur de poussée conforme à l'invention, illustré par la figure 6, vient d'être décrit à la lumière d'un système de poussée TSa selon un agencement illustré par la figure 4 pour équiper, par exemple, un dispositif de propulsion aérien 10 tel que celui-ci d'ores et déjà décrit en lien avec la figure 5.

Décrivons à présent, en lien avec la figure 7, un tel procédé 100 de correction de vecteur de poussée d'un système de poussée TSa d'un dispositif de propulsion aérien 10 tel que celui d'ores et déjà décrit en lien avec la figure 1. Un tel procédé 100 est similaire à celui décrit en lien avec la figure 6 et comporte, itérativement selon une période temporelle SP prédéterminée :
- Une étape 101 de traduction d'une commande de poussée TC en consigne RSI de vitesse en rotation d'un arbre ou rotor mu par un moteur à combustion interne ;
- une étape 102 de production d'un écart RSE entre une vitesse en rotation de consigne RSI et une vitesse mesurée RSM de l'arbre rotatif dudit moteur à combustion interne ;
- une étape 110 de production d'une commande de puissance PC, éventuellement corrigée par la mise en oeuvre d'une étape 111 ou 112, du moteur à combustion interne exploitant ledit écart RSE pour asservir ledit moteur en vitesse ;
- une étape 120 de production d'une commande d'actionnement de moyens électriques correcteurs du vecteur de poussée généré sous l'effet du moteur à combustion interne.

Pour rappel, un dispositif de propulsion aérien 10, d'ores et déjà décrit en lien avec la figure 1, comporte deux systèmes de poussée 12a et 12b, comprenant respectivement les groupes de poussée 12a, 12b à base de turboréacteurs et des moyens correcteurs d'assiette électriques 19a et 19b, sous la forme de propulseurs électriques secondaires, en l'espèce des turbines électriques, délivrant des vecteurs de poussées sensiblement normaux à un plan virtuel P11 décrivant ou symbolisant une plateforme 11. Pour mettre en oeuvre un procédé 100 de correction de vecteur de poussée conforme à l'invention et illustré par la figure 7, un tel dispositif de propulsion aérien 10 nécessite d'être adapté. La première adaptation vise à modifier les moyens de traitement 30 contrôleurs électroniques de navigation pour implanter dans leur mémoire de programmes, les instructions de programme dont l'exécution provoque la mise en oeuvre d'un procédé 100, tel qu'illustré par la figure 7, de correction des vecteurs de poussée AL12a et AL12b de chacun des systèmes de poussée TSa et TSb. En variante, des moyens de traitement propres à chaque système de poussée TSa, TSb, à l'instar des moyens 30a illustrés par la figure 4, peuvent être ajoutés pour mettre en oeuvre respectivement un tel procédé 100, lesdits moyens de traitement propres aux systèmes de poussée coopérant avec les moyens électroniques 30 contrôleurs de navigation pour délivrer des commandes de poussée TC.

Par ailleurs, le dispositif de propulsion 10 selon la figure 1 peut être adapté pour sélectionner des turboréacteurs intégrant un capteur, tels que le capteur 12a-s du système de poussée selon la figure 4, pour mesurer la vitesse de rotation des rotors des turboréacteurs. Un seul capteur de mesure de vitesse de rotation peut être utilisé par groupe de poussée 12a ou 12b, ce dernier étant couplé ou intégré à l'un des turboréacteurs, tel que le turboréacteur 12a1, lorsque le groupe de poussée en comporte une pluralité. En variante chaque propulseur ou turboréacteur, voire une pluralité, d'un même groupe de poussée peut être équipé d'un tel capteur. L'étape 102 d'un procédé 100 selon la figure 7 peut alors consister à effectuer une moyenne préalable des mesures délivrées par les capteurs associés aux différents propulseurs thermiques du groupe de poussée ou mettre en oeuvre tout autre arbitrage, par exemple consistant à ignorer certaines mesures trop éloignées des autres, pour disposer d'une mesure consolidée RSM de rotation d'arbre ou de rotor du groupe de poussée. Il en est de même pour la production de la commande de puissance PC ou PC' produite par l'étape 110, éventuellement corrigée par les étapes 111 et 112, qui peut être adressée à l'ensemble des turboréacteurs du groupe de poussée lorsque celui en comporte plusieurs, à l'instar de l'exemple illustré par la figure 1.

Examinons à présent en lien avec la figure 7, comment transposer l'enseignement d'un procédé 100 de correction de vecteur de poussée déjà décrit en lien avec la figure 6 à un système de poussée TSa d'un dispositif de propulsion 10 selon la figure 1 ainsi adapté. Par mesure de simplification, considérons que le groupe de poussée 12a ne comporte que le turboréacteur 12a1. Les étapes d'un tel procédé 100 selon la figure 7 sont globalement similaires à celles des étapes du procédé 100 selon la figure 6.

Ainsi, un tel procédé de contrôle de vecteur de poussée conforme à l'invention illustré par la figure 7, se distingue de l'état de la technique en qu'il provoque la mise en oeuvre d'un asservissement 110 en vitesse du rotor du turboréacteur 12a1 du groupe de poussée 12a. Un tel asservissement vise à faire atteindre par le rotor dudit turboréacteur une vitesse de rotation de consigne RSI, le plus rapidement possible, et à maintenir celle-ci, quelles que soient les perturbations externes éventuelles. Un procédé 100 selon l'invention comporte ainsi une première étape 101 pour traduire une commande de poussée TC, émanant du contrôleur électronique de navigation 30, en une vitesse de rotation de consigne RSI du rotor du turboréacteur 12a1 du groupe de poussée 12a. A titre d'exemple, la figure 7 illustre ainsi un encadré en lien avec l'étape 101 décrivant une courbe illustrant un modèle de conversion non linéaire d'une commande de poussée TC exprimée en kg et une vitesse de rotation de consigne RSI exprimée en milliers de tours par minute.

Un procédé 100 de contrôle de vecteur de poussée selon l'invention et tel qu'illustré par la figure 7 se distingue en outre de l'art antérieur en ce qu'il comporte, parallèlement et indépendamment du processus d'asservissement en vitesse du rotor du turboréacteur 12a1 du groupe de poussée 12a, c'est-à-dire sans intervenir sur la régulation en tant que telle de ladite vitesse en rotation dudit rotor dudit turboréacteur 12a1, une étape 120 d'élaboration de commandes d'actionnement AC de moyens électriques correcteurs 19a de vecteur de poussée du système de poussée, en l'espèce la turbine électrique 19a située à la proue du dispositif de propulsion 10 décrit par la figure 1. A l'instar du procédé 100 illustré par la figure 6, l'étape 120 du procédé 100 illustré par la figure 7 est agencée pour élaborer des commandes d'actionnement AC à partir de l'écart RSE entre vitesse de consigne RSI (tirée de l'étape 101) et vitesse mesurée RSM de l'arbre du moteur à combustion interne 12a1, ledit écart RSE étant calculé à l'étape 102. L'objectif de cette étape 120 est de compenser principalement la faible réactivité du turboréacteur 12a1. En liaison avec l'exemple du système de poussée TSa illustré par la figure 1, l'invention prévoit d'exploiter la turbine électrique 19a, originellement prévue pour corriger l'assiette du dispositif de propulsion 10, en tant que correcteur, ou booster, du vecteur de poussée AL12a généré le moteur à combustion interne 12a1 du groupe de poussée 12a durant l'asservissement en vitesse du rotor dudit turboréacteur 12a1. Ladite turbine électrique 19a intègre généralement, ou est associée à, un convertisseur traduisant une consigne d'activation électrique graduée en en vitesse de rotation RS19 de son arbre. Du fait de sa conception, la turbine électrique 19a est beaucoup plus réactive que le turboréacteur 12a1. Elle peut générer un vecteur de poussée AL19a additionnel au vecteur AL12a délivré par le groupe de 12a dont le turboréacteur 12a1. Un actionnement soudain et adapté de la turbine électrique 19a permet, dans une phase d'accélération du régime du turboréacteur 12a1, d'obtenir très rapidement un vecteur de poussée, résultant de la conjonction ou combinaison des vecteurs de poussées AL12a et AL19a, d'une amplitude ou force identique à celle que décrirait virtuellement un vecteur de poussée AL12a si le turboréacteur 12a1 était doté d'une réactivité quasi instantanée. Comme d'ores et déjà expliqué en lien avec le procédé 100 illustré par la figure 6, la mise en oeuvre de l'asservissement en vitesse du turboréacteur 12a1 (étape 110) tend à faire atteindre à celui-ci la vitesse de rotation de consigne RSI. La puissance développée par la turbine électrique 19a décroit sous l'effet de la mise à jour itérative de la commande d'actionnement AC qui est fonction de l'écart RSE, jusqu'à ne laisser actif que le turboréacteur 12a1 ou plus généralement le groupe de poussée 12a. Par la mise en oeuvre itérative, selon la période SP, du procédé 100, la turbine électrique 19a est à nouveau sollicitée dès qu'un écart RSE est à nouveau positif (c'est-à-dire dès que la vitesse de rotation RS12 de l'arbre rotatif du turboréacteur 12a1 devient inférieure à la vitesse de consigne RSI) et de valeur absolue suffisante pour provoquer un actionnement de la turbine 19a. L'invention prévoit que l'étape 120 soit agencée pour produire itérativement une commande d'actionnement AC de la turbine 19a agissant comme moyens électriques correcteurs du vecteur de poussée par multiplication, intégration et/ou dérivation de l'écart RSE entre la vitesse de rotation de consigne RSI et la vitesse de rotation mesurée RSM de l'arbre du moteur à combustion interne 12a1. Selon un mode de réalisation préféré, l'accent est mis, intégralement ou majoritairement, sur une commande d'actionnement obtenue proportionnellement audit écart RSE. Le calcul 120 de la commande d'actionnement AC peut en outre exploiter un modèle paramétrique de la réactivité d'un turboréacteur, tel que le turboréacteur 12a1, de sorte que le vecteur de poussée du système de poussée TSa, résultant de la combinaison des vecteurs de poussée AL19a et AL12a générés respectivement la turbine électrique 19a et le groupe de poussée 12a, décrive une force ou amplitude de poussée la plus stable possible durant le processus d'asservissement en vitesse des moteurs à combustion interne du groupe de poussée et prévienne des surcompensations du vecteur de poussée AL12a.

La mise en oeuvre du procédé 100 permet ainsi d'adjoindre un vecteur de poussée AL19a additionnel pour compenser une lente croissance de l'amplitude du vecteur de poussée AL12a généré par le ou les turboréacteurs du groupe de poussée 12a.

Un même procédé de contrôle de vecteur de poussée 100 peut être mis en oeuvre pour corriger le vecteur de poussée du groupe de poussée 12b du système de poussée TSb du dispositif de propulsion illustré par la figure 1. Les commandes de puissance PC sont élaborées pour réguler le régime moteur des turboréacteurs du groupe de poussée 12b. Les commandes d'actionnement de moyens électriques correcteurs de vecteur de poussée sont élaborées pour réguler la puissance de la turbine électrique 19b positionnée à la poupe du dispositif de propulsion 10. Le contrôleur électronique de navigation 30 se charge d'adresser respectivement aux deux systèmes de poussée TSa et TSb les commandes de poussée TC adaptées.

Un procédé 100 de correction de vecteur de poussée conforme à l'invention, illustré par les figure 6 et 7, a été décrit à la lumière d'un premier système de poussée TSa selon un agencement illustré par la figure 4, comprenant un groupe de poussée 12a comportant un moteur thermique à deux temps entraînant en rotation un premier rotor mécanique 12a-r, ledit système de poussée comprenant en outre des moyens 19a correcteurs du vecteur de poussée AL12a, généré par ledit groupe de poussée 12a, conjuguant l'actionnement d'un moteur électrique 19a-e entraînant en rotation un rotor mécanique 19a-r pour compléter ledit vecteur de poussée AL12a, et l'actionnement d'un moteur-générateur pour freiner la rotation dudit premier rotor mécanique 12a-r et ainsi réduire ledit vecteur de poussée AL12a. Un tel procédé 100 de correction de vecteur de poussée conforme à l'invention vient également d'être décrit à la lumière d'un deuxième exemple de système de poussée TSa ou TSb selon un agencement illustré par la figure 1, comprenant deux groupes de poussée 12a, 12b comportant chacun une pluralité de turboréacteurs 12a1, lesdits systèmes de poussée comprenant en outre des moyens électriques correcteurs des vecteurs de poussée AL12a, AL12b générés par lesdits groupes de poussée 12a, 12b, par l'actionnement d'une turbine électrique de proue 19a ou de poupe 19b pour équiper, par exemple, un dispositif de propulsion aérien 10 tel que celui-ci d'ores et déjà décrit en lien avec la figure 1.

L'interopérabilité d'un procédé de correction du vecteur de poussée conforme à l'invention et délivré par un groupe de poussée est telle, que celui-ci peut parfaitement être exploité pour mouvoir un dispositif de propulsion aérien tel que le dispositif 10 d'ores et déjà décrit en lien avec la figure 2, présentant quatre systèmes de poussée TSa à TSd, dont le système de poussée TSa est illustré de manière détaillée par la figure 3. Un tel système de poussée TSa est structurellement très différent des deux précédents exemples. Pour autant un procédé de correction de vecteur de poussée conforme à l'invention peut parfaitement être exploité.

Décrivons à présent, en lien avec la figure 8, un tel procédé 100 de correction de vecteur de poussée d'un système de poussée TSa d'un dispositif de propulsion aérien 10 tel que celui d'ores et déjà décrit en lien avec la figure 2. Un tel procédé 100 est similaire à celui décrit en lien avec la figure 6 et comporte, itérativement selon une période temporelle SP prédéterminée :
- une étape 101 de traduction d'une commande de poussée TC en consigne RSI de vitesse en rotation d'un arbre ou rotor mu par un moteur à combustion interne, en l'espèce un turboréacteur ;
- une étape 102 de production d'un écart RSE entre une vitesse en rotation de consigne RSI et une vitesse mesurée RSM de l'arbre rotatif dudit moteur à combustion interne ;
- une étape 110 de production d'une commande de puissance PC, éventuellement corrigée par la mise en oeuvre d'une étape 111 ou 112, du moteur à combustion interne exploitant ledit écart RSE pour asservir ledit moteur en vitesse ;
- une étape 120 de production d'une commande d'actionnement de moyens électriques correcteurs du vecteur de poussée généré par le moteur à combustion interne.

Pour rappel, un système de poussée 12a illustré par la figure 3 comprend un groupe de poussée 12a comprenant un turboréacteur 12a-e et des moyens correcteurs de vecteur de poussée, sous la forme d'une paire de guides déflecteurs 19a-1, 19a-5 montés rotatifs, en miroir l'un de l'autre, et mutuellement agencés pour « pincer » le vecteur de poussée AL12a généré par le turboréacteur 12a-e en aval de la sortie d'éjection de fluide 12a-o dudit turboréacteur 12a-e. Chaque guide 19a-1 ou 19a-5 est mu en rotation, selon un axe 19a-2 ou 19a-6 normal au vecteur de poussée AL12a, par un actionneur électrique 19-3 à came coopérant avec ledit guide via une bielle 19a-4.

Pour mettre en oeuvre un procédé 100 de correction de vecteur de poussée conforme à l'invention et illustré par la figure 8, un tel dispositif de propulsion aérien 10 selon la figure 2 nécessite d'être adapté. La première adaptation vise à modifier les moyens de traitement 30 contrôleurs électroniques de navigation pour implanter dans leur mémoire de programmes, les instructions de programme dont l'exécution provoque la mise en oeuvre d'un procédé 100, tel qu'illustré par la figure 8, de correction des vecteurs de poussée AL12a à AL12d de chacun des quatre systèmes de poussée TSa à TSd. En variante, des moyens de traitement propres à chaque système de poussée, à l'instar des moyens 30a illustrés par la figure 4, peuvent être dédiés aux quatre systèmes de poussée pour mettre en oeuvre respectivement un tel procédé 100, lesdits moyens de traitement propres aux systèmes de poussée TSa à TSd coopérant avec les moyens électroniques 30 contrôleurs de navigation pour délivrer des commandes de poussée TC.

Par ailleurs, chaque système de poussée d'un tel dispositif de propulsion 10 selon la figure 2, dont le système TSa est illustré par la figure 3, peut être adapté pour adjoindre un capteur, tel que le capteur 12a-s du système de poussée selon la figure 4, pour mesurer la vitesse de rotation de l'arbre ou du rotor du turboréacteur 12a-e.

Examinons à présent en lien avec la figure 8, comment transposer l'enseignement d'un procédé 100 de correction de vecteur de poussée, d'ores et déjà décrit en lien avec la figure 6 ou 7, au système de poussée TSa d'un dispositif de propulsion 10 selon la figure 2 ainsi adapté.

A l'instar du procédé 100 décrit en lien avec la figure 7, le procédé 100 de contrôle de vecteur de poussée conforme à l'invention et illustré par la figure 8, se distingue de l'état de la technique en qu'il provoque la mise en oeuvre d'un asservissement 110 en vitesse du turboréacteur 12a-e du groupe de poussée 12a. Un tel asservissement vise à faire atteindre par l'arbre de rotor dudit turboréacteur 12a-e une vitesse de rotation de consigne RSI, le plus rapidement possible, et à maintenir celle-ci, quelles que soient les perturbations externes éventuelles. Un procédé 100 selon la figure 8 comporte ainsi une première étape 101 pour traduire une commande de poussée TC, émanant du contrôleur électronique de navigation 30, en une vitesse de rotation de consigne RSI du rotor du turboréacteur 12a-e du groupe de poussée 12a.

Un procédé 100 de contrôle de vecteur de poussée selon l'invention et tel qu'illustré par la figure 8 se distingue en outre de l'art antérieur en ce qu'il comporte, durant le processus d'asservissement en vitesse du rotor du turboréacteur 12a-e du groupe de poussée 12a et indépendamment dudit processus d'asservissement, une étape 120 d'élaboration de commandes d'actionnement AC de moyens électriques correcteurs 19a de vecteur de poussée du système de poussée, en l'espèce l'actionneur 19a-3 du guide déflecteur 19a-1 et/ou 19-5 situé en aval de la sortie d'éjection de fluide 12a-o du turboréacteur 12a-e du système de poussée TSa décrit en lien avec la figure 3. A l'instar du procédé 100 illustré par la figure 6, l'étape 120 du procédé illustré par la figure 8 est agencée pour élaborer des commandes d'actionnement AC à partir de l'écart RSE entre une vitesse de consigne RSI (tirée de l'étape 101) et une vitesse mesurée RSM de l'arbre du moteur à combustion interne 12a-e, ledit écart RSE étant calculé à l'étape 102. L'objectif de cette étape itérative 120 est de compenser principalement la faible réactivité du turboréacteur 12a-e parallèlement audit processus d'asservissement, c'est-à-dire sans intervenir sur la régulation en tant que telle de ladite vitesse en rotation du rotor dudit turboréacteur 12a1. En liaison avec l'exemple du système de poussée TSa illustré par la figure 3, l'invention prévoit d'exploiter les guides déflecteurs 19a-1 et/ou 19a-5 en tant que correcteurs du vecteur de poussée AL12a généré par le moteur à combustion interne 12a-e du groupe de poussée 12a. L'actionneur électrique 19a-3 desdits guides déflecteurs intègre généralement, ou est associé à, un convertisseur traduisant une consigne d'activation électrique graduée en un déplacement ou course CS19 de la came dudit moteur 19a-3. Du fait de sa conception, l'actionneur électrique 19a-3 est beaucoup plus réactif que le turboréacteur 12a-e. Il peut provoquer, par « pincement », une réduction de l'amplitude du vecteur de poussée AL12a en aval des guides déflecteurs 19a-1 et 19a-5, ces derniers déviant pour tout ou partie ledit vecteur de poussée AL12a en amont desdits guides déflecteurs 19a-1 et 19a-5, c'est-à-dire en sortie d'éjection de fluide 12a-o. Si lesdits guides déflecteurs 19a-1 et 19a-5 sont positionnés par défaut pour « pincer » ledit vecteur de poussée AL12a et ainsi dévier pour partie, par exemple de l'ordre de cinq à vingt-cinq pourcents chacun, le vecteur de poussée AL12a en sortie de fluide 12a-o, on peut considérer, qu'un actionnement du moteur 19a-3 visant à écarter lesdits guides déflecteurs 19a-1 et 19a-5 dudit vecteur de poussée AL12a, revient à accroître ledit vecteur de poussée AL12a en aval de ces derniers. Nous pouvons donc considérer qu'un actionnement, via l'actionneur électrique 19a-3, des guides déflecteurs 19a-1 et/ou 19a-5 peut accroître, réduire, voire inverser le vecteur de poussée AL12a généré par le turboréacteur 12a-e en aval desdites guides déflecteurs 19a-1 et 19a-5. Ainsi, un actionnement soudain et adapté du moteur électrique à came 19a-3 visant à écarter du vecteur de poussée AL12 lesdits guides déflecteurs 19a1 et/ou 19-5 permet, dans une phase d'accélération du régime du turboréacteur 12a-e, d'obtenir très rapidement un vecteur de poussée d'amplitude ou de force accrue en aval desdits guides déflecteurs, identique à celle que décrirait virtuellement un vecteur de poussée AL12a si le turboréacteur était doté d'une réactivité quasi instantanée. Comme d'ores et déjà expliqué en lien avec le procédé 100 illustré par la figure 6, la mise en oeuvre de l'asservissement en vitesse du turboréacteur 12a-e (étape 110) tend à faire atteindre à celui-ci la vitesse de rotation de consigne RSI. La course de la came du moteur électrique 19a-3 recouvre peu à peu sa position nominale ou par défaut et les guides déflecteurs 19a-1 et/ou 19a-5 « pincent » de nouveau une partie du vecteur de poussée AL12a généré par le turboréacteur 12a-e. Par la mise en oeuvre itérative, selon la période SP, du procédé 100, les guides déflecteurs 19a-1 et/ou 19a-5 sont de nouveau mouvementés, sous l'action du moteur électrique 19a-3, pour réduire leur « effet de pincement » du vecteur de poussée AL12a dès qu'un écart RSE est à nouveau positif (c'est-à-dire dès que la vitesse de rotation RS12 de l'arbre rotatif du turboréacteur 12a-e devient inférieure à la vitesse de consigne RSI) et d'une valeur suffisante pour provoquer un nouvel actionnement du moteur 19a-3.

Réciproquement, lorsque l'écart RSE devient négatif (c'est-à-dire dès que la vitesse de rotation RS12 de l'arbre rotatif du turboréacteur 12a-e devient supérieure à la vitesse de consigne RSI), une commande d'actionnement du moteur à came 19a-3 provoque un accroissement du pincement de vecteur de poussée par les guides déflecteurs 19a-1 et/ou 19a-5. Ainsi dans une phase de décélération du régime du turboréacteur 12a-e, l'invention permet d'obtenir très rapidement un vecteur de poussée d'amplitude réduite en aval desdits guides déflecteurs, identique à celle que décrirait virtuellement un vecteur de poussée AL12a si le turboréacteur était doté d'une réactivité quasi instantanée. La mise en oeuvre de l'asservissement en vitesse du turboréacteur 12a-e (étape 110) tendant à faire atteindre à celui-ci la vitesse de rotation de consigne RSI, la course de la came du moteur électrique 19a-3 recouvre peu à peu sa position nominale ou par défaut et les guides déflecteurs 19a-1 et/ou 19a-5 ne « pincent » de nouveau plus qu'une faible partie du vecteur de poussée AL12a généré par le turboréacteur 12a-e, par exemple dix pourcent de ce dernier, ou toute autre portion du vecteur de poussée, avantageusement comprise entre cinq et vingt-cinq pourcents.

L'invention prévoit que l'étape 120 soit agencée pour produire itérativement une commande d'actionnement AC desdits moyens électriques correcteurs du vecteur de poussée AL12a, en l'espèce le moteur électrique 19a-3 par multiplication, intégration et/ou dérivation de l'écart RSE entre la vitesse de rotation de consigne RSI et la vitesse de rotation mesurée RSM de l'arbre du moteur à combustion interne 12a-e. Selon un mode de réalisation préféré, l'accent est mis, intégralement ou majoritairement, sur une commande d'actionnement obtenue proportionnellement audit écart RSE. Le calcul 120 de la commande d'actionnement AC peut en outre exploiter un modèle de la réactivité d'un turboréacteur, de sorte que le vecteur de poussée du système de poussée TSa en aval des guides déflecteurs décrive une amplitude de poussée la plus stable possible durant le processus d'asservissement en vitesse du turboréacteur 12a-e du groupe de poussée 12a et prévenir tout phénomène de surcompensation.

La mise en oeuvre du procédé 100 permet ainsi d'accroître ou réduire l'amplitude du vecteur de poussée AL12a généré par le moteur à combustion interne 12a-e du groupe de poussée 12a. Il peut même provoquer une inversion de la direction dudit vecteur de poussée lors d'un pincement total, par les deux guides déflecteurs 19a-1, 19a-5, du vecteur de poussée en aval de la sortie d'éjection de fluide 12a-o du moteur à combustion interne 12a-e. Un telle contrepoussée ou rétro-poussée peut être rendue possible lorsque que lesdits guides déflecteurs sont agencés pour guider un écoulement fluidique de telle sorte, qu'au niveau des partie distales desdits guides déflecteurs, des vecteurs de poussée secondaires AL12a' et AL12a" soient générés et présentent des directions inverses à celle du vecteur de poussée originel AL12a en amont desdites guides déflecteurs. Un tel actionnement provoque un effet technique de frein ou de contrepoussée particulièrement intéressant durant le pilotage du dispositif de propulsion 10 selon la figure 2. Pour pouvoir mettre en oeuvre une telle contrepoussée, encore faut-il conserver un vecteur de poussée AL12a en amont des guides déflecteurs 19a-1, 19a-5, d'une amplitude suffisante. L'exploitation d'une étape 111, telle que décrite précédemment, pour corriger la commande de puissance PC produite à l'étape 110, de sorte que ladite commande de puissance ne soit pas inférieure à seuil bas PCMin est à ce titre particulièrement avantageuse. De la même manière, un procédé 100 selon la figure 8 peut comporter une étape 112 pour limiter la commande de puissance PC générée à l'étape 110 de sorte que celle-ci n'excède pas un seuil haut PCMax. De cette façon, il est possible de réduire les nuisances sonores provoquées par les moteurs à combustions interne des groupes de poussée au décollage du dispositif de propulsion aérien 10 selon la figure 2. L'ouverture des guides déflecteurs 19a-1 et 19a-5 compensant le déficit de puissance ainsi créé. Pour interpréter et initialiser de tels seuils bas PCMin et/ou haut PCMax, un procédé 100 selon la figure 8 peut comporter une étape 113 pour décoder, ou prendre en compte une consigne HTLI en limitation haute et/ou LTLI en limitation basse de la poussée du groupe de poussée émanant des moyens électroniques contrôleurs de navigation 30 dudit dispositif de propulsion 10.

Un même procédé de contrôle de vecteur de poussée 100 peut être mis en oeuvre pour corriger le vecteur de poussée des groupes de poussée 12b, 12c, 12d des systèmes de poussée TSb, TSc et TSd du dispositif de propulsion 10 illustré par la figure 2. Le contrôleur électronique de navigation 30 se charge d'adresser aux quatre systèmes de poussée TSa à TSd les commandes de poussée TC adaptées.

L'invention a été décrite au travers de différentes configurations de systèmes de poussée, plus précisément de groupe de poussée et de moyens correcteurs de vecteur de poussée, comportant respectivement des moteurs à combustion interne à deux temps, quatre temps, des turboréacteurs et des actionneurs à commandes électriques de types servomoteurs, moteurs à arbre rotatifs, à came, etc. L'invention ne saurait être limitée à ces seuls exemples de propulseurs ou actionneurs. Elle concerne plus généralement la correction d'un vecteur de poussée délivré par un ou plusieurs propulseurs principaux dont la réactivité en réponse à des commandes de modification de puissance (ou de régime moteur) nécessite d'être compensée. De la même manière, l'invention ne saurait être limitée aux seuls exemples de dispositifs de propulsions aériens, à décollage et atterrissage verticaux. L'invention peut s'appliquer à la correction de vecteur de poussée d'un système de poussée équipant tout dispositif de propulsion, aérien, aquatique ou terrestre, véhiculant une charge.

## Revendications

1. Procédé (100) de correction du vecteur de poussée délivré par un groupe de poussée (12a, 12b, 12c, 12d, 12e, 12f, 12g, 12h) d'un système de poussée (TSa, TSb, TSc, TSd, TSe, TSf, TSg, TSh) comportant des moyens de traitement (30, 30a) agencés pour mettre en oeuvre ledit procédé (100), ledit groupe de poussée (12a) comportant un rotor mécanique (12a-r) mu en rotation par un arbre rotatif d'un moteur à combustion interne (12a-e) en réponse à une commande de puissance (PC), ledit procédé (100) comportant, itérativement (SP) :
- une étape (101) de conversion d'une commande de poussée (TC) en une vitesse de rotation de consigne (RSI) de l'arbre du moteur à combustion interne (12a-e) du groupe de poussée (12a) ;
- une étape (102) de production d'un écart (RSE) entre ladite vitesse de rotation de consigne (RSI) et la vitesse de rotation mesurée (RSM) dudit arbre, par un capteur de mesure (12a-s) coopérant avec ledit moteur à combustion interne (12a-e) et avec lesdits moyens de traitement (30,30a) ;
- une étape (110) d'élaboration de la commande de puissance (PC) à partir dudit écart (RSE) entre ladite vitesse de rotation de consigne (RSI) et la vitesse de rotation mesurée (RSM) dudit arbre du moteur à combustion interne (12a-e) de sorte à réduire ledit écart (RSE) et ainsi asservir en vitesse la rotation de l'arbre du moteur à combustion interne (12a-e) ;
ledit procédé étant **caractérisé en ce que** :
- le système de poussée comporte en outre des moyens électriques correcteurs (19a, 19b, 19c, 19d, 19e, 19f, 19g, 19h) du vecteur de poussée délivré par ledit groupe de poussée ;
- et **en ce que** ledit procédé comporte une étape (120) itérative (SP), indépendante dudit asservissement en vitesse de la rotation de l'arbre du moteur à combustion interne (12a-e), d'élaboration d'une commande d'actionnement (AC) desdits moyens électriques correcteurs de vecteur de poussée (19a-e, 19a-3) à partir dudit écart (RSE) entre la vitesse de rotation de consigne (RSI) et la vitesse de rotation mesurée (RSM) de l'arbre du moteur à combustion interne (12a-e).

2. Procédé (100) selon la revendication précédente, pour lequel l'étape (110) d'élaboration de la commande de puissance (PC) consiste à produire ladite commande de puissance (PC) par multiplication, intégration et/ou dérivation dudit écart (RSE) entre ladite vitesse de rotation de consigne (RSI) et la vitesse de rotation mesurée (RSM) dudit arbre.

3. Procédé (100) selon l'une quelconque des revendications précédentes, comportant une étape (111) de correction (PC') de la commande de puissance (PC) produite (110) de sorte qu'une telle commande de puissance (PC, PC') ne soit pas inférieure à un seuil (PCMin) de commande de puissance minimale.

4. Procédé (100) selon l'une quelconque des revendications précédentes, comportant une étape (112) de correction (PC') de la commande de puissance (PC) produite (110) de sorte qu'une telle commande de puissance (PC, PC') n'excède pas un seuil (PCMax) de commande de puissance maximale.

5. Procédé (100) selon l'une quelconque des revendications 3 et 4, comportant une étape (113) de prise en compte d'une consigne (LTLI, HTLI) en limitation basse ou haute de la poussée du groupe de poussée et d'initialisation d'un seuil (PCMin, PCMax) de commande minimale ou maximale.

6. Procédé (100) selon l'une quelconque des revendications précédentes, pour lequel l'étape (120) d'actionnement des moyens électriques correcteurs (19a-e, 19a-3) du vecteur de poussée consiste à produire la commande d'actionnement (AC) desdits moyens électriques correcteurs du vecteur de poussée (19a-e, 19a-3) par multiplication, intégration et/ou dérivation dudit écart (RSE) entre ladite vitesse de rotation de consigne (RSI) et la vitesse de rotation mesurée (RSM) de l'arbre du moteur à combustion interne (12a-e).

7. Produit programme d'ordinateur comportant une ou plusieurs instructions de programme interprétables par des moyens de traitement d'un ordinateur, lesdites instructions de programme étant chargeables dans une mémoire non volatile de ce dernier, **caractérisé en ce que** l'exécution desdites instructions par lesdits moyens de traitement provoque la mise en oeuvre d'un procédé (100) selon l'une quelconque des revendications précédentes.

8. Support de mémorisation lisible par un ordinateur comportant les instructions d'un produit programme d'ordinateur selon la revendication précédente.

9. Système de poussée (TSa, TSb, TSc, TSd, TSe, TSf, TSg, TSh) comportant un groupe de poussée (12a, 12b, 12c, 12d, 12e, 12f, 12g, 12h), des moyens électriques correcteurs (19a, 19b, 19c, 19d, 19e, 19f, 19g, 19h) du vecteur de poussée délivré par ledit groupe de poussée, des moyens de traitement (30, 30a) agencés pour mettre en oeuvre un procédé (100) de correction du vecteur de poussée selon l'une quelconque des revendications 1 à 6.

10. Système de poussée (TSa) selon la revendication précédente pour lequel :
- le groupe de poussée (12a) comporte :
∘ un moteur (12a-e) à combustion interne et à arbre rotatif dont la vitesse de rotation (RS12) est fonction de la commande de puissance (PC, PC') produite par les moyens de traitement (30, 30a) ;
∘ un rotor mécanique (12a-r) mu en rotation par ledit moteur (12a-e) à combustion interne ;
- les moyens électriques correcteurs (19a) du vecteur de poussée comportent :
∘ un moteur électrique (19a-e) à arbre rotatif dont la vitesse de rotation (RS19) est fonction de la commande d'actionnement (AC) desdits moyens correcteurs (19a-e) produite par les moyens de traitement (30, 30a) ;
∘ un rotor mécanique (19a-r) mu en rotation par ledit moteur électrique (19a-e) et délivrant un vecteur de poussée (AL19a) additionnel sensiblement parallèle au vecteur de poussée (AL12a) délivré par le groupe de poussée (12a).

11. Système de poussée (TSa) selon la revendication précédente comportant un moteur-générateur (12a-g) couplé au moteur à combustion interne (12a-e) du groupe de poussée (12a) pour transformer tout ou partie de la puissance mécanique générée par ledit moteur à combustion interne (12a-e) en énergie électrique (EP) délivrée par ledit moteur-générateur (12a-g) selon une commande d'actionnement (FC) produite par les moyens de traitement (30, 30a).

12. Système de poussée (TSa) selon la revendication 9, pour lequel :
- le groupe de poussée (12a) comporte un turboréacteur (12a) présentant une sortie d'éjection de fluide (12a-o) ;
- les moyens électriques correcteurs du vecteur de poussée (19a) comportent :
∘ une paire de guides déflecteurs (19a-1, 19a-5) montés rotatifs et mutuellement agencés pour dévier, en aval de la sortie d'éjection de fluide (12a-o), tout ou partie (AL12a', AL12a") du vecteur de poussée (AL12a) du groupe de poussée (12a) dans une ou des directions sensiblement normales à la direction dudit vecteur de poussée (AL12a) à la sortie d'éjection de fluide (12a-o) du turboréacteur (12a) ;
∘ des actionneurs électriques (19a-6) agencés pour interpréter la commande d'actionnement (AC) et provoquer respectivement une rotation (r) des guides déflecteurs (19a-1, 19a-5).

13. Dispositif de propulsion (10) comportant au moins un système de poussée (TSa, TSb, TSc, TSd, TSe, TSf, TSg, TSh), selon l'une quelconque des revendications 9 à 12, des moyens contrôleurs de navigation (30) agencés pour produire une commande de poussée (TC) interprétable par les moyens de traitements (30, 30a) dudit au moins un système de poussée (TSa, TSb, TSc, TSd, TSe, TSf, TSg, TSh).

14. Dispositif de propulsion aérien (10) selon la revendication précédente, comportant une plateforme (11, P11) agencée pour accueillir une charge (1), des moyens supports (14) du groupe de poussée (12a, 12b, 12c, 12d, 12e, 12f, 12g, 12h) dudit au moins un système de poussée (TSa, TSb, TSc, TSd, TSe, TSf, TSg, TSh), lesdits moyens supports (14) étant agencés pour orienter le vecteur de poussée (AL12a, AL12b, AL12c, AL12d) dudit groupe de poussée (12a, 12b, 12c, 12d, 12e, 12f, 12g, 12h) selon une direction sensiblement normale à la plateforme (11, P11).

15. Dispositif de propulsion (10) selon la revendication 13 ou 14, lorsque ledit au moins un système de poussée (TSa, TSb, TSc, TSd, TSe, TSf, TSg, TSh) est agencé pour mettre en oeuvre un procédé de contrôle de la force de poussée conforme à la revendication 5, pour lequel les moyens contrôleurs de navigation (30) sont agencés pour élaborer une consigne (LTLI, HTLI) en limitation basse ou haute de la poussée du groupe de poussée (12a, 12b, 12c, 12d, 12e, 12f, 12g, 12h) dudit au moins un système de poussée (TSa, TSb, TSc, TSd, TSe, TSf, TSg, TSh).

16. Dispositif de propulsion (10) selon l'une quelconque des revendications 13 à 15, comportant un carénage (11c) associé à la plateforme (11) agencé pour protéger ladite charge (1) de l'environnement dudit dispositif de propulsion (10);

## Patentansprüche

1. Verfahren (100) zum Korrigieren des Schubvektors, der von einer Schubanordnung (12a, 12b, 12c, 12d, 12e, 12f, 12g, 12h) eines Schubsystems (TSa, TSb, TSc, TSd, TSe, TSf, TSg, TSh) geliefert wird, das zur Durchführung des genannten Verfahrens (100) ausgelegte Verarbeitungsmittel (30, 30a) umfasst, wobei die genannte Schubanordnung (12a) einen mechanischen Rotor (12a-r) umfasst, der durch eine Drehwelle eines Verbrennungsmotors (12a-e) als Reaktion auf einen Leistungsbefehl (PC) in Drehung versetzt wird, wobei das genannte Verfahren (100) iterativ (SP) Folgendes beinhaltet:
- einen Schritt (101) des Umwandelns eines Schubbefehls (TC) in eine Solldrehzahl (RSI) der Welle des Verbrennungsmotors (12a-e) der Schubanordnung (12a);
- einen Schritt (102) des Erzeugens einer Abweichung (RSE) zwischen der genannten Solldrehzahl (RSI) und der gemessenen Drehzahl (RSM) der genannten Welle durch einen Messsensor (12a-s), der mit dem genannten Verbrennungsmotor (12a-e) und mit den genannten Verarbeitungsmitteln (30, 30a) zusammenwirkt;
- einen Schritt (110) des Ausarbeitens des Leistungsbefehls (PC) auf der Basis der genannten Abweichung (RSE) zwischen der genannten Solldrehzahl (RSI) und der gemessenen Drehzahl (RSM) der genannten Welle des Verbrennungsmotors (12a-e), um die genannte Abweichung (RSE) zu verringern und somit die Drehzahl der Welle des Verbrennungsmotors (12a-e) zu regeln;
wobei das genannte Verfahren **dadurch gekennzeichnet ist, dass**:
- das Schubsystem ferner elektrische Mittel (19a, 19b, 19c, 19d, 19e, 19f, 19g, 19h) zum Korrigieren des von der genannten Schubanordnung gelieferten Schubvektors umfasst;
- und dadurch, dass das genannte Verfahren einen iterativen (SP), von der genannten Regelung der Drehzahl der Welle des Verbrennungsmotors (12a-e) unabhängigen Schritt (120) des Ausarbeitens eines Betätigungsbefehls (AC) der genannten elektrischen Mittel zum Korrigieren des Schubvektors (19a-e, 19a-3) auf der Basis der genannten Abweichung (RSE) zwischen der Solldrehzahl (RSI) und der gemessenen Drehzahl (RSM) der Welle des Verbrennungsmotor (12a-e) beinhaltet.

2. Verfahren (100) nach dem vorherigen Anspruch, wobei der Schritt (110) des Ausarbeitens des Leistungsbefehls (PC) darin besteht, den genannten Leistungsbefehl (PC) durch Multiplikation, Integration und/oder Ableitung der genannten Abweichung (RSE) zwischen der genannten Solldrehzahl (RSI) und der gemessenen Drehzahl (RSM) der genannten Welle zu erzeugen.

3. Verfahren (100) nach einem der vorherigen Ansprüche, das einen Schritt (111) des Korrigierens (PC') des erzeugten (110) Leistungsbefehls (PC) beinhaltet, so dass ein solcher Leistungsbefehl (PC, PC') nicht kleiner ist als ein Schwellenwert (PCMin) für den minimalen Leistungsbefehl.

4. Verfahren (100) nach einem der vorherigen Ansprüche, das einen Schritt (112) des Korrigierens (PC') des erzeugten (110) Leistungsbefehls (PC) beinhaltet, so dass ein solcher Leistungsbefehl (PC, PC') einen Schwellenwert (PCMax) für den maximalen Leistungsbefehl nicht überschreitet.

5. Verfahren (100) nach einem der Ansprüche 3 und 4, das einen Schritt (113) des Berücksichtigens eines Sollwerts (LTLI, HTLI) für die Unter- oder Obergrenze des Schubs der Schubanordnung und des Initialisierens eines Schwellenwerts (PCMin, PCMax) für den minimalen oder maximalen Befehl beinhaltet.

6. Verfahren (100) nach einem der vorherigen Ansprüche, wobei der Schritt (120) des Betätigens der elektrischen Mittel (19a-e, 19a-3) zum Korrigieren des Schubvektors darin besteht, den Betätigungsbefehl (AC) der genannten elektrischen Mittel (19a-e, 19a-3) zum Korrigieren des Schubvektors durch Multiplikation, Integration und/oder Ableitung der genannten Abweichung (RSE) zwischen der genannten Solldrehzahl (RSI) und der gemessenen Drehzahl (RSM) der Welle des Verbrennungsmotors (12a-e) zu erzeugen.

7. Computerprogrammprodukt mit einem oder mehreren Programmbefehlen, die von Verarbeitungsmitteln eines Computers interpretierbar sind, wobei die genannten Programmbefehle in einen nichtflüchtigen Speicher des Letzteren geladen werden können, **dadurch gekennzeichnet, dass** die Ausführung der genannten Befehle durch die genannten Verarbeitungsmittel die Durchführung eines Verfahrens (100) nach einem der vorherigen Ansprüche bewirkt.

8. Computerlesbares Speichermedium, das die Befehle eines Computerprogrammprodukts nach dem vorherigen Anspruch umfasst.

9. Schubsystem (TSa, TSb, TSc, TSd, TSe, TSf, TSg, TSh) mit einer Schubanordnung (12a, 12b, 12c, 12d, 12e, 12f, 12g, 12h), elektrischen Mitteln (19a, 19b, 19c, 19d, 19e, 19f, 19g, 19h) zum Korrigieren des von der genannten Schubanordnung gelieferten Schubvektors, Verarbeitungsmitteln (30, 30a), die zum Durchführen eines Verfahrens (100) zum Korrigieren des Schubvektors nach einem der Ansprüche 1 bis 6 ausgelegt sind.

10. Schubsystem (TSa) nach dem vorherigen Anspruch, wobei:
- die Schubanordnung (12a) Folgendes umfasst:
∘ einen Verbrennungsmotor (12a-e) mit einer Drehwelle, deren Drehzahl (RS12) von dem von den Verarbeitungsmitteln (30, 30a) erzeugten Leistungsbefehl (PC, PC') abhängt;
∘ einen mechanischen Rotor (12a-r), der durch den genannten Verbrennungsmotor (12a-e) in Drehung versetzt wird;
- die elektrischen Mittel (19a) zum Korrigieren des Schubvektors Folgendes umfassen:
∘ einen Elektromotor (19a-e) mit einer Drehwelle, deren Drehzahl (RS19) von dem von den Verarbeitungsmitteln (30, 30a) erzeugten Betätigungsbefehl (AC) der genannten Korrekturmittel (19a-e) abhängig ist;
∘ einen mechanischen Rotor (19a-r), der durch den genannten Elektromotor (19a-e) in Drehung versetzt wird und einen zusätzlichen Schubvektor (AL19a) im Wesentlichen parallel zu dem von der Schubanordnung (12a) gelieferten Schubvektor (AL12a) liefert.

11. Schubsystem (TSa) nach dem vorherigen Anspruch mit einem Motor-Generator (12a-g), der mit dem Verbrennungsmotor (12a-e) der Schubanordnung (12a) gekoppelt ist, um die von dem genannten Verbrennungsmotor (12a-e) erzeugte mechanische Leistung ganz oder teilweise in elektrische Energie (EP) umzuwandeln, die von dem genannten Motor-Generator (12a-g) gemäß einem von den Verarbeitungsmitteln (30, 30a) erzeugten Betätigungsbefehl (FC) geliefert wird.

12. Schubsystem (TSa) nach Anspruch 9, wobei:
- die Schubanordnung (12a) ein Turbostrahltriebwerk (12a) mit einem Fluidausstoßauslass (12a-o) umfasst;
- die elektrischen Mittel zum Korrigieren des Schubvektors (19a) Folgendes umfassen:
∘ ein Paar Ablenkführungen (19a-1, 19a-5), die drehbar montiert und gegenseitig zum Ablenken, stromabwärts des Fluidausstoßauslasses (12a-o) des Schubvektors (AL12a), der Schubanordnung (12a) ganz oder teilweise (AL12a', AL12a") in eine oder mehrere Richtungen im Wesentlichen normal zur Richtung des genannten Schubvektors (AL12a) am Fluidausstoßauslass (12a-o) des Turbostrahltriebwerks (12a) ausgelegt sind;
∘ elektrische Aktuatoren (19a-6), die zum Interpretieren des Betätigungsbefehls (AC) und zum jeweiligen Bewirken einer Drehung (r) der Ablenkführungen (19a-1, 19a-5) ausgelegt sind.

13. Antriebsvorrichtung (10) mit mindestens einem Schubsystem (TSa, TSb, TSc, TSd, TSe, TSf, TSg, TSh) nach einem der Ansprüche 9 bis 12, Navigationssteuermitteln (30), ausgelegt zum Erzeugen eines Schubbefehls (TC), der von den Verarbeitungsmitteln (30, 30a) des genannten mindestens einen Schubsystems (TSa, TSb, TSc, TSd, TSe, TSf, TSg, TSh) interpretierbar ist.

14. Luftantriebsvorrichtung (10) nach dem vorherigen Anspruch mit einer zum Aufnehmen einer Ladung (1) ausgelegten Plattform (11, P11), Tragmitteln (14) für die Schubanordnung (12a, 12b, 12c, 12d, 12e, 12f, 12g, 12h) des genannten mindestens einen Schubsystems (TSa, TSb, TSc, TSd, TSe, TSf, TSg, TSh), wobei die genannten Tragmittel (14) zum Orientieren des Schubvektors (AL12a, AL12b, AL12c, AL12d) der genannten Schubanordnung (12a, 12b, 12c, 12d, 12e, 12f, 12g, 12h) in eine Richtung im Wesentlichen normal zur Plattform (11, P11) ausgelegt sind.

15. Antriebsvorrichtung (10) nach Anspruch 13 oder 14, wenn das genannte mindestens eine Schubsystem (TSa, TSb, TSc, TSd, TSe, TSf, TSg, TSh) zum Durchführen eines Schubkraftsteuerverfahrens nach Anspruch 5 ausgelegt ist, wobei die Navigationssteuermittel (30) zum Ausarbeiten eines Sollwerts (LTLI, HTLI) für die Unter- oder Obergrenze des Schubs der Schubanordnung (12a, 12b, 12c, 12d, 12e, 12f, 12g, 12h) des genannten mindestens einen Schubsystems (TSa, TSb, TSc, TSd, TSe, TSf, TSg, TSh) ausgelegt sind.

16. Antriebsvorrichtung (10) nach einem der Ansprüche 13 bis 15 mit einer mit der Plattform (11) assoziierten Verkleidung (11c), die zum Schützen der genannten Ladung (1) vor der Umgebung der genannten Antriebsvorrichtung (10) ausgelegt ist.

## Claims

1. Method (100) for correcting the thrust vector delivered by a thrust unit (12a, 12b, 12c, 12d, 12e, 12f, 12g, 12h) of a thrust system (TSa, TSb, TSc, TSd, TSe, TSf, TSg, TSh) comprising processing means (30, 30a) arranged to implement said method (100), said thrust unit (12a) comprising a mechanical rotor (12a-r) moved in rotation by a rotary shaft of an internal combustion engine (12a-e) in response to a power command (PC), said method (100) comprising, iteratively (SP):
- a step (101) of converting a thrust command (TC) into a rotation speed setpoint (RSI) of the shaft of the internal combustion engine (12a-e) of the thrust unit (12a);
- a step (102) of producing an error value (RSE) between said rotation speed setpoint (RSI) and the measured rotation speed (RSM) of said shaft, by a measurement sensor (12a-s) cooperating with said internal combustion engine (12a-e) and with said processing means (30, 30a);
- a step (110) of generating the power command (PC) based on said error value (RSE) between said rotation speed setpoint (RSI) and the measured rotation speed (RSM) of said shaft of the internal combustion engine (12a-e) so as to reduce said error value (RSE) and thus control the rotation speed of the shaft of the internal combustion engine (12a-e);
said method being **characterized in that**:
- the thrust system also comprises electrical correction means (19a, 19b, 19c, 19d, 19e, 19f, 19g, 19h) of the thrust vector delivered by said thrust unit;
- and **in that** said method comprises an iterative (SP) step (120), independent of said speed control of the rotation of the shaft of the internal combustion engine (12a-e), for generating an actuation command (AC) of said electrical correction means of the thrust vector (19a-e, 19a-3) based on said error value (RSE) between the rotation speed setpoint (RSI) and the measured rotation speed (RSM) of the shaft of the internal combustion engine (12a-e).

2. Method (100) according to the preceding claim, for which the step (110) of generating the power command (PC) consists of producing said power command (PC) by multiplication, integration and/or derivation of said error value (RSE) between said rotation speed setpoint (RSI) and the measured rotation speed (RSM) of said shaft.

3. Method (100) according to any one of the preceding claims, comprising a step (111) of correcting (PC') the power command (PC) generated (110) so that such a power command (PC, PC') is not less than a minimum power command threshold (PCMin).

4. Method (100) according to any one of the preceding claims, comprising a step (112) of correcting (PC') the power command (PC) generated (110) so that such a power command (PC, PC') does not exceed a maximum power command threshold (PCMax).

5. Method (100) according to any one of claims 3 and 4, comprising a step (113) of taking account of a lower or upper limit setpoint (LTLI, HTLI) of the thrust of the thrust unit and of initialization of a minimum or maximum command threshold (PCMin, PCMax).

6. Method (100) according to any one of the preceding claims, for which the step (120) of actuation of the electrical correction means (19a-e, 19a-3) of the thrust vector consists of generating the actuation command (AC) of said electrical correction means of the thrust vector (19a-e, 19a-3) by multiplication, integration and/or derivation of said error value (RSE) between said rotation speed setpoint (RSI) and the measured rotation speed (RSM) of the shaft of the internal combustion engine (12a-e).

7. Computer program product comprising one or more program instructions capable of being interpreted by processing means of a computer, said program instructions being capable of being loaded in a non-volatile memory thereof, **characterized in that** the execution of said instructions by said processing means causes the implementation of a method (100) according to any one of the preceding claims.

8. Computer-readable storage media comprising the instructions of a computer program product according to the preceding claim.

9. Thrust system (TSa, TSb, TSc, TSd, TSe, TSf, TSg, TSh), comprising a thrust unit (12a, 12b, 12c, 12d, 12e, 12f, 12g, 12h), electrical correction means (19a, 19b, 19c, 19d, 19e, 19f, 19g, 19h) of the thrust vector delivered by said thrust unit, processing means (30, 30a) arranged to implement a method (100) for correcting the thrust vector according to any one of claims 1 to 6.

10. Thrust system (TSa) according to the preceding claim for which:
- the thrust unit (12a) comprises:
∘ a rotary-shaft internal combustion engine (12a-e) the rotation speed (RS12) of which is a function of the power command (PC, PC') generated by the processing means (30, 30a);
∘ a mechanical rotor (12a-r) moved in rotation by said internal combustion engine (12a-e);
- the electrical correction means (19a) of the thrust vector comprise:
∘ a rotary-shaft electric motor (19a-e) the rotation speed (RS19) of which is a function of the actuation command (AC) of said correction means (19a-e) generated by the processing means (30, 30a);
∘ a mechanical rotor (19a-r) moved in rotation by said electric motor (19a-e) and delivering an additional thrust vector (AL19a) substantially parallel to the thrust vector (AL12a) delivered by the thrust unit (12a).

11. Thrust system (TSa) according to the preceding claim, comprising a motor-generator (12a-g) coupled with the internal combustion engine (12a-e) of the thrust unit (12a) in order to convert all or part of the mechanical power generated by said internal combustion engine (12a-e) into electrical power (EP) delivered by said motor-generator (12a-g) according to an actuation command (FC) generated by the processing means (30, 30a).

12. Thrust system (TSa) according to claim 9 for which:
- the thrust unit (12a) comprises a turbojet (12a) having a fluid discharge outlet (12a-o);
- the electrical correction means (19a) of the thrust vector comprise:
∘ a pair of deflector guides (19a-1, 19a-5) mounted in rotation and mutually arranged to deflect, downstream of the fluid discharge outlet (12a-o), all or part (AL12a', AL12a") of the thrust vector (AL12a) of the thrust unit (12a) in one or more directions substantially normal to the direction of said thrust vector (AL12a) at the fluid discharge outlet (12a-o) of the turbojet (12a);
∘ electric actuators (19a-6) arranged to interpret the actuation command (AC) and to cause respectively a rotation (r) of the deflector guides (19a-1, 19a-5).

13. Propulsion device (10) comprising at least one thrust system (TSa, TSb, TSc, TSd, TSe, TSf, TSg, TSh), according to any one of claims 9 to 12, navigation controller means (30) arranged to generate a thrust command (TC) capable of being interpreted by the processing means (30, 30a) of said at least one thrust system (TSa, TSb, TSc, TSd, TSe, TSf, TSg, TSh).

14. Aerial propulsion device (10) according to the preceding claim, comprising a platform (11, P11) arranged to receive a load (1), support means (14) of the thrust unit (12a, 12b, 12c, 12d, 12e, 12f, 12g, 12h) of said at least one thrust system (TSa, TSb, TSc, TSd, TSe, TSf, TSg, TSh), said support means (14) being arranged to orient the thrust vector (AL12a, AL12b, AL12c, AL12d) of said thrust unit (12a, 12b, 12c, 12d, 12e, 12f, 12g, 12h) in a direction substantially normal to the platform (11, P11).

15. Propulsion device (10) according to claim 13 or 14, when said at least one thrust system (TSa, TSb, TSc, TSd, TSe, TSf, TSg, TSh) is arranged to implement a method of control of the thrust force according to claim 5, for which the navigation controller means (30) are arranged to develop a lower or upper limit setpoint (LTLI, HTLI) of the thrust of the thrust unit (12a, 12b, 12c, 12d, 12e, 12f, 12g, 12h) of said at least one thrust system (TSa, TSb, TSc, TSd, TSe, TSf, TSg, TSh).

16. Propulsion device (10) according to any one of claims 13 to 15, comprising a fairing (11c) associated with the platform (11) arranged to protect said load (1) from the environment of said propulsion device (10).
